# EUROPEAN PATENT APPLICATION

(11) **EP 3 241 784 A1**
(43) Date of publication of application: **08.11.2017**
(21) Application number: 15875178.4
(22) Date of filing: 25.12.2015
(51) Int. Cl.: B65D 81/17, F16K 15/20

(54) **FLUID CONTAINER, STOP VALVE THEREOF AND MANUFACTURING METHOD THEREFOR**

(30) Priority: 31.12.2014 CN 201410853968; 03.06.2015 CN 201510299507
(71) Applicant: Nie, Huiping, Shanghai 200431 (CN); Zhang, Jiaying, Shanghai 200131 (CN)
(72) Inventor: NIE, Huiping, Shanghai 200431 (CN)
(74) Representative: Casalonga
(86) International application number: PCT/CN2015/098899
(87) International publication number: WO 2016/107500

(57) **Abstract**

A fluid container includes a fluid storing main body and at least one check valve. The fluid storing main body includes two fluid storing films overlapping with each other, to form at least one fluid storing cell having a fluid storing chamber. The check valve includes two valve films overlapping with each other. Each valve film has outer and inner extending portions integrated formed with each other. The two inner extending portions and the fluid storing films overlap with each other and are connected between the two inner extending portions to form a fluid filling channel, so as to fill fluid to the fluid storing chamber of each fluid storing cell via the fluid filling channel. After the fluid filling is finished, the pressure of the fluid storing chamber acts on the two valve films to close the fluid filling channel, so as to avoid fluid leakage.

## Description

### CROSS REFERENCE OF RELATED APPLICATION

This is a non-provisional application that claims priority to International Application Number PCT/CN2015/098899, international filing date 12/25/2015, which claims priority to Chinese application number CN201410853968.9, filed on 12/31/2014 and Chinese application number CN201510299507.6, filed on 06/03/2015, the entire contents of each of which are expressly incorporated herein by reference.

### NOTICE OF COPYRIGHT

A portion of the disclosure of this patent document contains material which is subject to copyright protection. The copyright owner has no objection to any reproduction by anyone of the patent disclosure, as it appears in the United States Patent and Trademark Office patent files or records, but otherwise reserves all copyright rights whatsoever.

### BACKGROUND OF THE PRESENT INVENTION

### FIELD OF INVENTION

The present invention relates to a fluid containing device, and more particularly to a fluid container having a cut-off and non-return function and the check valve thereof.

### DESCRIPTION OF RELATED ARTS

In the modem logistics industry, packaging boxes are used most widely. However, the packaging method of this kind of traditional packaging boxes does not provide any anti-impact or anti-collision function, and also does not prevent any damage when the packaging boxes fall off. In other words, during being transported and stored, the packaging boxes are usually thrown from here to there, and may result in the deformation of the packaging boxes, and this may further lead to the damaging or deformation of the packaged items. Therefore, for some items which need enhanced packaging protections, such as digital products, plastics, ceramics, biologics, chemicals, food, and medicine, a cushioning effect should be provided to prevent the packaged items from being damaged during the transportation and storage.

The existing solution is that the traditional paper packaging boxes can be filled with cushioning materials, such as foam materials, to achieve the protection purpose of providing the cushioning effect. However, the cost of transporting and storing is expensive during transporting the packaging boxes and the filled cushioning materials. On the other hand, the cushioning foam materials pollute the environment, which is not environmental friendly.

The inflatable air packaging arrangements in the market have good cushioning effect because of the filled air. On the other hand, during being transported, the air packaging arrangements are deflated to minimize the occupying space. The packaging arrangements can be inflated at the time during packaging when it is needed to package packaged items, so as to reduce the cost. Therefore, this air packaging arrangements are highly acceptable in the market.

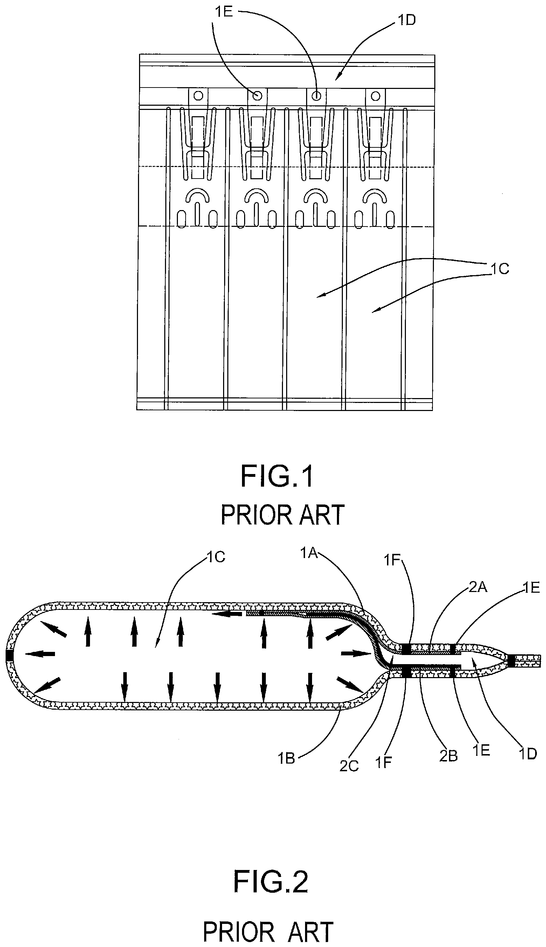

Figs. 1 and 2 of the drawings illustrate the structure of a conventional air packaging arrangement, wherein the air packaging arrangement comprises two outer films 1A and 1B and two inner films 2A and 2B, wherein the two outer films 1A and 1B are heat-sealed together. A plurality of inflating channels 2C is formed between the outer films 2A and 2B and the inflating channels 2C will be closed automatically after the inflating process is finished, wherein the air bag packaging arrangement forms a plurality of inflatable air cell 1C via heat-sealing the two outer films 1A and 1B. The two outer films 1A and 1B are then heat-sealed and folded to make the inflating structure to form various shapes, so as to be used to contain the packaged items or be used as filling materials, so as to provide an air cushioning effect for the packaged items.

However, the air packaging arrangement according to the prior art is not practical. Specifically, during the inflating process, air needs to pass through a main air channel 1D to reach entering openings of the inflating channels 2C. However, the structure that forms the main air channel 1D is the two outer films 1A and 1B. During the inflating process, the time for the air reaching to each position is different and the pressure of each position is different, so that the outer films and the inner films will not expanded at the same time. For example the outer film 1A and the inner film 2A may not expanded at the same time, so that the outer film 1A and the inner film 2A will form a waved and staggered structure easily, so that the entering opening of the inflating channels 2C at some positions may be blocked and cannot be inflated.

The existing solution is to heat-seal the outer film and the adjacent inner film within the area of the main air channel 1D, i.e. the outer film 1A and the inner film 2A are heat-sealed together via heat-sealing points 1E. The outer film 1B and the inner film 2B are also heat-sealed via heat-sealing points 1E. Thus, when the main air channel 1D is being inflated, due to the existing of the heat-sealing points 1E, the parts of the outer films 1A and 1B corresponding to the main air channel 1D will pull the respective connected inner film2A and 2B , so that the entering opening of all inflating channels 2C along the main air channel 1D will be opened.

However, the structure of four films around the main air channel 1D has higher technological requirements. Firstly, an extra heat-sealing step is needed in the manufacturing process; i.e. the step of heat-sealing for forming 1E is needed to be added to avoid the two inner films being heat-sealed together. What's more, referring to the illustrated structure, a heat-resisting structure need to be formed at the position correspondingly where the heat-seals 1E are formed, so that in the step of heat-sealing for forming 1E, the adjacent outer film and inner film are heat sealed together, and the two inner films 2A and 2B will not be heated together due to the existing of the heat-resisting structure. Therefore, due to this structure, the requirement for the selection of the heat-sealing positions and the heat-sealing molds is high.

Meanwhile, according to this solution, although the heat-sealing points 1E are provided to improve the inflating performance, the space area between the heat-sealing line 1F and the air channels 1D is provided with the outer film and the separated inner film at two sides thereof. However, when the two films attach together with each other, a partial attachment will still be resulted due to electrostatic adsorption, so that during inflating, the films cannot be evenly applied with a expanding force, and thus cannot open fully. On the other hand, the air remaining between the outer film and the inner film at this space area may press the outer film and the inner film to lead to an uneven stress to partial points of the inner film, so that the entering openings of some inflating channel 2C may be blocked. At the same time, air can enter between the adjacent outer film and inner film through two adjacent heat-sealing points 1E, so that the pressure change caused by the entering and outing of the air between the outer film and the inner film will affect the pressure of the main air channel 1D, so that a differential pressure will occur between the inner inflatable chamber 1C and main the air channels 1D and may lead to the leakage of air from the inflatable chamber 1C.

### SUMMARY OF THE PRESENT INVENTION

The invention is advantageous in that it provides a fluid container and a check valve thereof, wherein the check valve is formed by two valve films, and a main channel which is used to distribute fluid is also formed between the two valve films, so as to facilitate the filling of the fluid.

Another advantage of the invention is to provide a fluid container and a check valve thereof, wherein the fluid container can be implemented as a device for storing various kinds of fluids, such as gas or liquid. Via the self-adhesive checking effect of the check valve, the gas or liquid is retained in a fluid storing cell of the fluid container to prevent the gas or the liquid from spilling out.

Another advantage of the invention is to provide a fluid container and a check valve thereof, wherein two fluid storing films outside the check valve are not extended to the position of the main channel, so that it is not necessary to heat-sealing the outer film together with the adjacent inner film as the prior art, so the manufacturing process is much simpler.

Another advantage of the invention is to provide a fluid container and a check valve thereof, wherein since there is only one valve film on the two sides of the main channel respectively, while filing fluid or after fluid enters into the main channel, two valve film can expanded easily, so as to open entering openings of fluid filling channels, through which the fluid enters into each fluid storing cell.

Another advantage of the invention is to provide a fluid container and a check valve thereof, what is different from the prior art in which all films forming the air valve are provided between two outer films, the two valve films of the check valve of the present invention are not completely provided between the fluid storing film, so the present invention provides an entire different structure of the check valve.

Another advantage of the invention is to provide a fluid container and a check valve thereof, wherein the main channel and the fluid filling channel are both formed by two same valve films, so as to ensure the consistency and smoothness of the inflating process.

Another advantage of the invention is to provide a fluid container and a check valve thereof, wherein part of the valve films, which form the main channel, are exposed outside and extended out from two fluid storing films, so that the outside of the corresponding to the exposed part of the check valve films is not provided with the fluid storing film, so as to reduce the material of the fluid storing film, so as to decrease the cost of the fluid container.

Another advantage of the invention is to provide a fluid container and a check valve thereof, wherein the check valve is a one-way valve, wherein after gas is inflated and a desired pressure is realized, the fluid filling channel between two the valve films will be closed automatically, so as to avoid fluid leakage.

Another advantage of the invention is to provide a fluid container and a check valve thereof, wherein the fluid container can be embodied as an air packaging arrangement, wherein the air packaging arrangement is suitable to be used as an air cushioning material to provide cushioning effect for the supported items or the air packaging arrangement can be filled into other packaging arrangements, such as packaging boxes to provide a cushioning protecting effect to the packaged items, wherein the air packaging arrangement is also suitable to be used to pack the packaged items directly, so as to provide cushioning effect around the packaged items, so that the air packaging arrangement according to the present invention has a wide application field.

Another advantage of the invention is to provide a fluid container and a check valve thereof, wherein the structure and producing process of the fluid container and the check valve are simple, environmental friendly and have lower cost, wherein when embodied as the air packaging arrangement, the fluid container can be widely used in the modern logistics packaging industry.

Additional advantages and features of the invention will become apparent from the description which follows, and may be realized by means of the instrumentalities and combinations particular point out in the appended claims.

According to the present invention, the foregoing and other objects and advantages are attained by a fluid container, comprising a fluid storing main body and a check valve, wherein the fluid storing main body comprises two fluid storing films overlapping with each other, so as to form at least one fluid storing cell, wherein each fluid storing cell has a fluid storing chamber, wherein the check valve comprises two valve films overlapping with each other, wherein the two fluid storing films and two valve films overlap partially, so that the check valve forms at least one fluid filling channel at the position where the four films overlap with each other, so as to fill fluid to the fluid storing chamber of each fluid storing cell via the fluid filling channel, and after the fluid is filled, the fluid in the fluid storing chamber press the two valve films to close the fluid filling channel, so as to avoid fluid leakage.

Preferably, the overlapping parts of two valve films and two fluid storing films forms the fluid filling channel, wherein other parts of two valve films overlap with each other to form a main channel, wherein the main channel has a fluid filling opening communicating with the main channel, so that while filing fluid, fluid enters the main channel through the fluid filling opening, and then enters into the fluid storing chamber through the fluid filling channel.

Preferably, the inner surface of at least one of two valve films is provided with a heat-resisting layer, so that the fluid filling channel is formed between two valve films via the heat sealing process.

Preferably, two valve films and two fluid storing films are heat sealed by a main channel sealing seam, so that the adjacent one of the valve films and the corresponding one of the fluid storing films are heat sealed together.

Preferably, the two valve films are heat sealed together at the ends far from the fluid filling channel via a valve film end sealing seam, so that the main channel is formed between the main channel sealing seams and the valve film end sealing seam.

Preferably, wherein the fluid container further comprises one or more blocking seams heat sealing two valve film together, wherein the blocking seams blocks the fluid in the fluid storing chamber from running out from the fluid filling channel.

Preferably, wherein the blocking seam further heat seals two valve films and one of the fluid storing films, so that after the fluid is filled, part of the valve film overlapping with the fluid storing films is pressed to the fluid storing film.

Preferably, two valve films are two independent films or are formed by folding one film.

Preferably, two fluid storing film are two independent films or are formed by folding one film.

Preferably, wherein the air packaging arrangement further forms a plurality of the fluid storing cells via one or more dividing seams, wherein each fluid storing cell forms at least one the fluid filling channel.

Preferably, wherein the fluid storing films and the valve films are flexible films, wherein each of the fluid storing films and the valve films is selected from the group consisting of polyethylene film, polypropylene film, polyvinyl chloride film, polyester film, polystyrene film and composite film.

Preferably, wherein the valve films are self-adhered films which are chemically modified, so as to improve the sealing property of the valve films to the fluid filling channels.

Preferably, wherein the part of the valve films, where forms the main channel are roughen, so that the main channel can be opened easily during filling fluid.

Preferably, wherein the fluid container forms a cushioning pad.

Preferably, wherein after being heat sealed and bended, the fluid container forms a packaging bag having a containing cavity.

Preferably, wherein each fluid storing cell of the air packaging arrangement provide one or more bending seams, so as to heat seal two fluid storing films together, so that each fluid storing cell forms a plurality of sub-fluid storing cells connecting and communicating with each other, so that the fluid storing main body forms a plurality of fluid filing side walls by bending the bending seams, wherein the fluid filling side wall defines the containing cavity.

Preferably, wherein the bending seams are respectively provided at middle positions of the fluid storing cells, so as to form a communicating channel at two sides of the fluid storing cell for communicating with two adjacent the sub-fluid storing cells.

Preferably, wherein the bending seams are respectively provided at two sides of the fluid storing cell, so as to form a communicating channel at a middle of each of the fluid storing cells for communicating with two adjacent the sub-fluid storing cells.

In accordance with another aspect of the invention, the present invention comprises a check valve, wherein the check valve is suitable to fill fluid to a fluid container, wherein the fluid container comprises two fluid storing films overlapping with each other, so as to form at least one fluid storing cell, wherein each fluid storing cell has a fluid storing chamber, wherein the check valve comprises two valve films overlapping with each other, wherein each valve film comprises an outer extending portion and an inner extending portion, wherein the outer extending portion and the inner extending portion of each valve film are integrated, wherein two inner extending portions and the fluid storing films of two valve films are overlapped with each other and are connected form a fluid filling channel between two inner extending portions, so as to fill fluid to the fluid storing chamber of each fluid storing cell via the fluid filling channel, and after the fluid filling is finished, the pressure of the fluid storing chamber acts on two valve films to close the fluid filling channel, so as to avoid fluid leakage.

Preferably, referring to the check valve, two outer extending portions of two valve films are overlapped with each other to form a main channel, wherein the main channel has a fluid filling opening communicating with the main channel, so that while filing fluid, fluid enters the main channel through the fluid filling opening, and then enters into the fluid storing chamber through the fluid filling channel.

Preferably, referring to the check valve, the inner surface of at least one of two valve films is provided with a heat-resisting layer, so that the fluid filling channel is formed between two inner extending portion of two valve films via the heat sealing process.

Preferably, referring to the check valve, two inner extending portions of two valve films and two fluid storing films are heat sealed together via a main channel sealing seam, so that the adjacent one the valve film and the corresponding one the fluid storing film are heat sealed together.

Preferably, referring to the check valve, two outer extending portions of two valve films are heat sealed via valve film end sealing seams at the side far away from the fluid filling channel, so that the main channel is formed between the main channel sealing seam and the valve film end sealing seam.

Preferably, the check valve further comprises one or more blocking seams connecting two inner extending portions of two valve films in a heat-sealing connecting manner, wherein the blocking seams blocks the fluid in the fluid storing chamber from running out from the fluid filling channel.

Preferably, referring to the check valve, wherein the blocking seam further connects two inner extending portions of two valve films and one of the fluid storing films, so that after the fluid filling is finished, and the parts of the valve films overlapping with the fluid storing film are pressed to the fluid storing film.

Preferably, referring to the check valve, two valve films are two independent films or are formed by folding one film.

Preferably, referring to the check valve, wherein each of the valve films is a flexible film, which is selected from the group consisting of a polyethylene film, polypropylene film, a polyvinyl chloride film, a polyester film, a polystyrene film and a composite film.

Preferably, referring to the check valve, wherein the valve film are self-adhered films which are chemically modified, so as to improve the sealing property of the valve films for the fluid filling channels.

Preferably, referring to the check valve, wherein the part of the valve films, where forms the main channel are roughen, so that the main channel can be opened easily during filling fluid.

Still further objects and advantages will become apparent from a consideration of the ensuing description and drawings.

These and other objectives, features, and advantages of the present invention will become apparent from the following detailed description, the accompanying drawings, and the appended claims.

### BRIEF DESCRIPTION OF THE DRAWINGS

Fig. 1 is a schematic view of a conventional air packaging arrangement.
Fig. 2 is a sectional view of an air valve of the conventional air packaging arrangement.
Fig. 3 is a schematic view of a fluid container which is embodied as an air packaging arrangement according to a first preferred embodiment of the present invention.
Fig. 4 is a sectional view of a check valve of the fluid container which is embodied as the air packaging arrangement according to the above first preferred embodiment of the present invention.
Fig. 5 is a sectional view of an alternative mode of the check valve of the fluid container which is embodied as the air packaging arrangement according to the above first preferred embodiment of the present invention.
Fig. 6 is a schematic view of the fluid container which is embodied as the air packaging arrangement illustrating the air packaging arrangement being inflated according to the above first preferred embodiment of the present invention.
Fig. 7 is a schematic view of the fluid container which is embodied as the air packaging arrangement in an inflated state according to the above first preferred embodiment of the present invention after the fluid container is inflated.
Fig. 8 is a schematic view of the fluid container which is embodied as the air packaging arrangement according to an alternative mode of the above first preferred embodiment of the present invention, wherein the fluid container is ready for inflation.
Fig. 9 is a schematic view of the fluid container which is embodied as the air packaging arrangement illustrating the air packaging arrangement being inflated according to the above alternative mode of the above first preferred embodiment of the present invention.
Fig. 10 is a schematic view of the fluid container which is embodied as the air packaging arrangement ready for inflation according to another alternative mode of the above first preferred embodiment of the present invention.
Fig. 11 is a schematic view of the fluid container which is embodied as the air packaging arrangement illustrating the air packaging arrangement being inflated according to another alternative mode of the above first preferred embodiment of the present invention.
Fig. 12 is a perspective view of the fluid container which is embodied as the air packaging arrangement according to another alternative mode of the above first preferred embodiment of the present invention.
Fig. 13 is a perspective view of the fluid container which is embodied as the air packaging arrangement according to the above another alternative mode of the above first preferred embodiment of the present invention, illustrating an unfolded structure of the fluid container.
Fig. 14 is a perspective view of the fluid container which is embodied as the air packaging arrangement according to another alternative mode of the above first preferred embodiment of the present invention.
Fig. 15 is a perspective view of the fluid container which is embodied as the air packaging arrangement according to the above another alternative mode of the above first preferred embodiment of the present invention, illustrating an unfolded structure of the fluid container.
Fig. 16 is a perspective view of the fluid container which is embodied as the air packaging arrangement according to another alternative mode of the above first preferred embodiment of the present invention.
Fig. 17 is a perspective view of the fluid container which is embodied as the air packaging arrangement according to the above another alternative mode of the above first preferred embodiment of the present invention, illustrating an unfolded structure of the fluid container.
Fig. 18 is a schematic view of a fluid container according to a second preferred embodiment of the present invention.
Fig. 19 is a sectional view of a check valve of the fluid container according to the above second preferred embodiment of the present invention.
Fig. 20 is a sectional view of an alternative mode of the check valve of the fluid container according to the above second preferred embodiment of the present invention.
Fig. 21 is a schematic view of the fluid container according to the above second preferred embodiment of the present invention, illustrating the fluid container being filled with fluid.
Fig. 22 is a schematic view of the fluid container after inflation according to the above second preferred embodiment of the present invention.
Fig. 23 is a perspective view of the fluid container according to another alternative mode of the above second preferred embodiment of the present invention.
Fig. 24 is a schematic view of a fluid container according to the above another alternative mode of the above second preferred embodiment of the present invention, illustrating an unfolded structure of the fluid container.
Fig. 25 is a perspective view of the fluid container according to another alternative mode of the above second preferred embodiment of the present invention.
Fig. 26 is a schematic view of a fluid container according to the above another alternative mode of the above second preferred embodiment of the present invention, illustrating an unfolded structure of the fluid container.
Fig. 27 is a perspective view of the fluid container according to another alternative mode of the above second preferred embodiment of the present invention.
Fig. 28 is a schematic view of a fluid container according to the above another alternative mode of the above second preferred embodiment of the present invention, illustrating an unfolded structure of the fluid container.
Fig. 29 is a schematic view of a fluid container according to a third preferred embodiment of the present invention.
Fig. 30 is a sectional view of a check valve of the fluid container according to the above third preferred embodiment of the present invention.
Fig. 31 is a schematic view of a fluid container according to an alternative mode of the above third preferred embodiment of the present invention.
Fig. 32 is a schematic view of a fluid container according to another alternative mode of the above third preferred embodiment of the present invention.
Fig. 33 is a schematic view of a fluid container according to another alternative mode of the above third preferred embodiment of the present invention.
Fig. 34 is a schematic view of a fluid container according to another alternative mode of the above third preferred embodiment of the present invention.
Fig. 35 is a schematic view of a fluid container according to another alternative mode of the above third preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

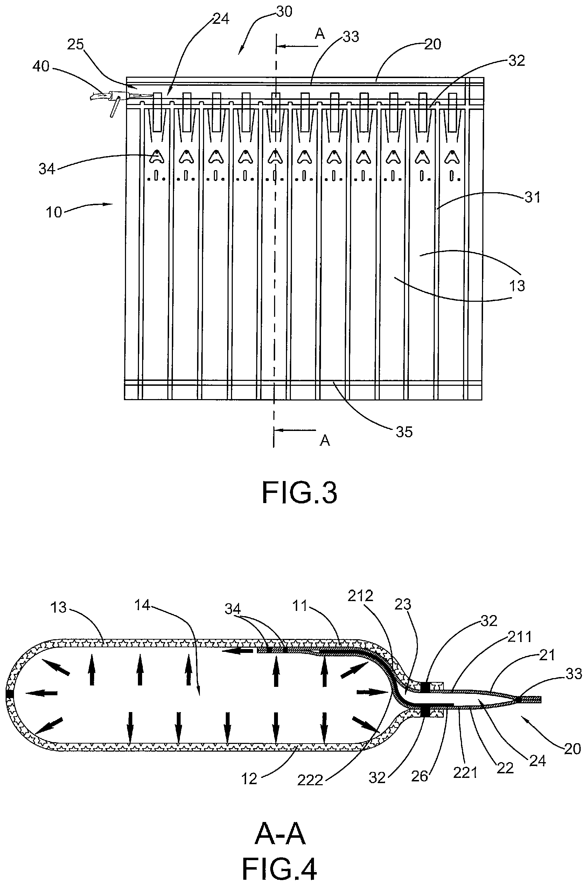

Figs. 3 to 7 of the drawings illustrate a fluid container according to a first preferred embodiment of the present invention, wherein the fluid container is embodied as an air packaging arrangement. The air packaging arrangement has an inflatable structure, so as to provide air cushioning effect, after being inflated, for various kinds of packaged items, such as electronic products, food, medicine products, chemical materials, biological materials, plastics, ceramics, and fast moving consumer goods. In an unused position, the air bag packaging arrangement can be stored and transported in an uninflated state. One user can inflate the air bag packaging arrangements when he/she would use them. The air bag packaging arrangements are advantageous for they are easy to use.

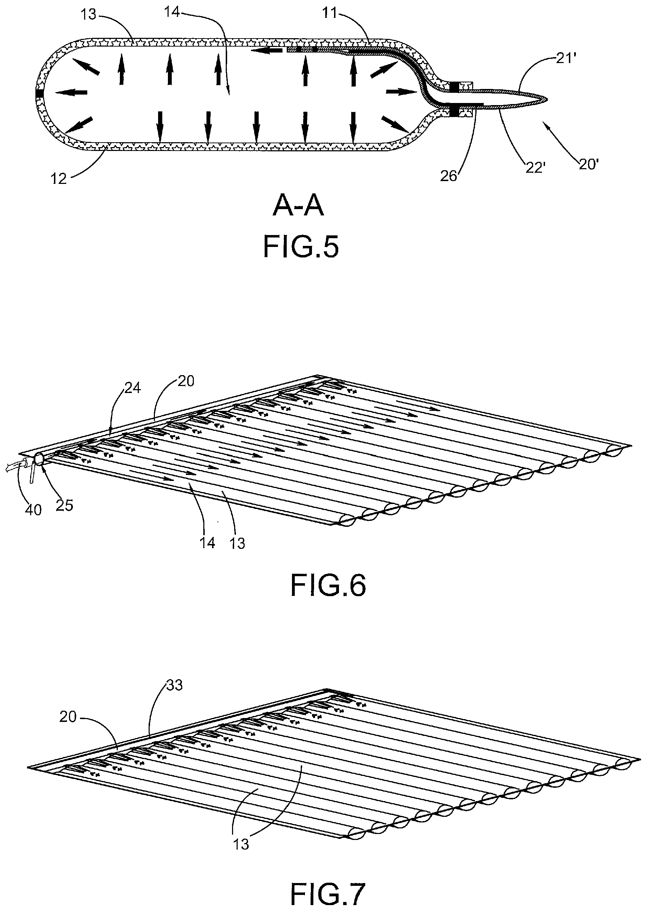

According to the preferred embodiment of the present invention, the air bag packaging arrangement can be an air cushioning material, which can form the air cushioning pad as illustrated in Fig. 7 and then provide air cushioning effect for the items. The air bag packaging arrangement can also be placed into another packaging arrangement, such as a packaging box, so that the air cushioning material functions as a filling material to provide the air cushioning effect for the packaged items.

Specifically, the air bag packaging arrangement comprises at least one inflatable body 10, wherein the inflatable body 10 comprises two cell films, i.e. a first cell film 11 and a second cell film 12, so as to form at least one inflatable cell 13. According to the preferred embodiment of the present invention, the air bag packaging arrangement further comprises at least one check valve which is embodied as an air valve 20 so as to inflate the inflatable cell 13.

The inflatable cell 13 is mainly formed by the two cell films, i.e. the first cell film 11 and the second cell film 12, wherein the first cell film 11 and the second cell film 12 can be two flexible films, which can be made of various proper materials, such as polyethylene film, polypropylene film, polyvinyl chloride film, polyester film, polystyrene film, and composite film. There is no limitation in this respect according to the present invention. All proper flexible films can be used to make the cell films. The first cell film 11 and the second cell film 12 overlap with each other and are heat-sealed together to form an inflatable chamber 14 of the inflatable cell 13, wherein the inflatable chamber 14 is used to store gas.

The air valve 20 is used to inflate the inflatable cell 13. In other words, while inflating, gas, such as air enters into the inflatable chamber 14 of each inflatable cell 13 through the air valve 20. After air pressure in the inflatable chamber 14 meets requirement, the inflating process is stopped, so that the air bag packaging arrangement is able to provide an air cushioning effect in an inflated condition.

It is worth mentioning that, according to the preferred embodiment of the present invention, the air valve 20 is a one-way air valve. In other words, during inflating, after air pressure in the inflatable chamber 14 reaches to a predetermined value, the air pressure in the inflatable chamber 14 will close the air valve 20, so the inflation process will be stopped and the air in the inflatable chamber 14 will not easily leak through the air valve 20.

More specifically, the air valve 20 comprises two valve films. i.e. a first valve film 21 and a second valve film 22. Similarly, the first valve film 21 and the second valve film 22 can be two flexible films, which can be made of various proper materials, such as polyethylene film, polypropylene film, polyvinyl chloride film, polyester film, polystyrene film, and composite film. There is no limitation in this respect according to the present invention. All proper flexible films can be used to make the valve films.

According to this preferred embodiment of the present invention, the first valve film 21 and the second valve film 22 overlap with each other. After the first valve film 21, the second valve film 22 and the first cell film 11, the second cell film 12 being arranged, the two valve films 21, 22 and the two cell films 11, 12 are heat-sealed by a series of proper heat sealing seams 30 to form an inflatable structure. The heat sealing seams 30 are formed via proper heat-sealing process, so that two or more films are heat sealed at required positions.

More specifically, the first valve film 21 and the second valve film 22 overlap with each other and being heat sealed to form at least one air inflating channel 23 and a main channel 24 and to form an air inflating opening 25 which is used to inflate, wherein the air inflating channel 23 and the main channel 24 communicate with each other. During inflation, users can use the inflating arrangement 40B, such as an inflating pump to inflate to the air bag packaging arrangement from the air inflating opening 25. The air enters into the main channel 24 from the air inflating opening 25, and enters into each of the air inflating channels 23 from the main channel 24, so as to inflate to the inflatable chamber 14.

It is worth mentioning that each of the heat sealing seams 30 comprises a plurality of dividing seams 31 separated from each other, so that two or more inflatable cells 13 are connected with each other side by side to form the inflatable main body 10, wherein the air valve 20 is provided to each inflatable cell 13 correspondingly. In other words, each inflatable cell 13 is able to be inflated independently. An extending dividing seam31 is formed between two of the inflatable cells 13, wherein the dividing seam 31 can be a heat-sealing line between two inflatable cells 13B adjacent to each other, so as to form a plurality of individual inflatable chambers 14 by these dividing seams 31. Hence, if one of the inflatable cells 13 is damaged to leak air, other inflatable cells 13 will not be affected. It is worth mentioning that the inflatable cell 13 also can communicate with each other, so that only one air valve 20 is enough to inflate all of the inflatable cells 11. In other words, the air bag packaging arrangement according to the present invention can form a plurality of the inflatable cells 13 via heat-sealing the first cell film 11 and the second cell film 12.

Corresponding to each inflatable cell 13, the air valve 20 forms the air inflating channel 23. That is to say, when the dividing seams 31 heat-seal the two cell films 11 and 12, the dividing seams 31B heat-seal the two valve films 21 and 22, so that the four films are heat-sealed together to form the air inflating channels 23 and the inflatable chambers 14, wherein each of the air inflating channels 23 is suitable to inflate the corresponding inflatable chamber 14.

It is worth mentioning that the dividing seams 31, which are spacedly arranged with each other, can be arranged with equal distances to form the inflatable cells 13 with the same size. Of course, the dividing seams 31 can also arrange with unequal distance to form the inflatable cells 13 with different sizes. The dividing seams 31 can be parallel with each other. According to the present invention, there is no limitation in this aspect. It is possible that a predetermined number of dividing seams 31 are arranged aslant or to form a turning in partial. Each of the inflatable cells 13 can form one air inflating channel 23. Two or more air inflating channels 23 can be formed to the inflatable cell 13B which has a bigger size by heat-sealing technology, so as to improve inflating efficiency.

In addition, the shape of each inflatable cell 13 is able to change after being inflated, so the inflatable main body 10 can be made to form various shapes and sizes. The inflatable cell 13 can be strip shaped, such as crosswise strip shaped and/or lengthways strip shaped, or bulk block shaped. It is worth mentioning that the shape is not imitated. In the preferred embodiment, the inflatable cell 13B can be formed to have a strip structure to form an air column after inflation.

According to this preferred embodiment of the present invention, the main channel 24 is formed by the air valve 20, which equal to an air distributing channel. During inflation, air enters into the main channel 24 from the air inflating opening 25, and then enters into each air inflating channel 23 through the main channel 24, so that the air is inflated into the corresponding inflatable chamber 14 through each air inflating channel 23. When the pressure in the inflatable chamber 14 reach to a predetermined value, the pressure in the inflatable chamber 14 acts on the two valve films 21 and 22 to close the air inflating channel 23, so as to avoid the air from running out of the air inflating channel 23 to enter into the main channel 24, i.e. to prevent the air in the inflatable chamber 14 from leaking.

Thus, according to the preferred embodiment of the present invention, while inflating to each inflatable chamber 14, air is only distributed between the two valve films 21 and 22. It is differ from the prior art as illustrated in Fig. 1 and Fig. 2 of the drawings, according to which, air will enter into the main channel 1D between two outer films 1A and 1B and then enter into the inflating channel 2C. According to the prior art, it may occur that air enters between the adjacent outer film and inner film, such as the outer film 1A and the inner film 2A from the space between two adjacent heat-sealing points 1E, so that the inflating effect is affected. According to the present invention, air only enters between two valve films 21 and 22, and will not enters between one valve film and one cell film as effected by the two cell films 11 and 12, so as to ensure the smoothness of the inflating.

More specifically, according to the preferred embodiment of the present invention, it is differ from the prior art as illustrated in Fig. 1 and Fig. 2 of the drawings, according to which, two inner films 2A and 2B are completely provided between the two outer films 1A and 1B, according to the present invention, two valve films 21 and 22 of the air valve 20 are only partially overlap with two cell films 11 and 12. As illustrated in Fig. 4 of the drawings, the first valve film 21 and the first cell film 11 overlap with each other partially, wherein the second valve film 22 and the second cell film 12 overlap with each other partially. Compared with the prior art illustrated in Fig. 1 and Fig. 2, the air packaging arrangement according to the present invention reduces the size of the cell films 11 and 12, so as to save more materials.

Correspondingly, two valve films 21 and 22 of the air valve 20 respectively comprise two outer extending portions 211 and 221 and two inner extending portions 212 and 222. That is to say, the first valve film 21 comprises a first outer extending portion 211 and a first inner extending portion 212, wherein the second valve film 22 comprises a second outer extending portion 221 and a second inner extending portion 222. The first outer extending portion 211 and the first inner extending portion 212 are formed integrally by extending in the length direction, wherein the second outer extending portion 221 and the second inner extending portion 222 are also formed integrally by extending in the length direction.

According to the preferred embodiment of the present invention, the outer extending portions 211 and 221 of two valve films 21 and 22 overlap with each other to form the main channel 24 having the air inflating opening 25. The inner extending portions 212 and 222 of two valve films 21 and 22 overlap with each other and overlap with two cell films 11 and 12, so as to form each air inflating channel 23 between the inner extending portions 212 and 222 after a heat sealing process is applied.

In other words, according to the present invention, the cell films 11 and 12 have not extended to the position of the main channel 24. Instead, the cell films 11 and 12 are overlapped at a partial position of the air valve 20 and are heat sealed together. Thus, it is not necessary to connect adjacent outer films and inner films in the heat sealing manner as the prior art illustrated in Fig. 1 and Fig. 2, so the making process is much simpler. Because there is only one of outer extending portion 211 or 221 on both sides of the main channel 24, while inflating, after air enters into the main channel 24, the outer extending portions 211 and 221 of two valve films 21 and 22 can swell easily, so as to open the air inflating channel 23 entering each inflatable cell 13.

It is understandable that the inner extending portions 212 and 222 of two valve films 21 and 22 are provided between two cell films 11 and 12, and the adjacent inner extending portions 212 and 222 are connected with the cell films 11 and 12 respectively via the main channel heat sealing seam 32, but two inner extending portions 212 and 222 are prevented from being heat sealed together by the main channel heat sealing seam 32, so as to form each inflatable air inflating channel 23 between the inner extending portions 212 and 222. Corresponding to the dividing seams 31, each air inflating channel 23 is provided with two side walls. Such separating manner can be realized by providing a separating device, such as a block plate between two inner extending portions 212 and 222 in the heat sealing step, so as to prevent the two inner extending portions 212 and 222 from being heat sealed together when forming the main channel heat sealing seam 32. Preferably, the inner surface of at least one of two inner extending portions 212 and 222 is attached with one heat-resisting layer 26, such as silicone oil, PVA, high temperature durable and adhering resisting ink, so that while forming the main channel heat sealing seam 32, the adjacent inner extending portions 212 and 222 are respectively connected with the cell films 11 and 12 in a heat sealing manner, but two inner extending portions 212 and 222 are not heat sealed together by the main channel heat sealing seam 32, so as to form the air inflating channel 23.

It is worth mentioning that the step of connecting the inner extending portions 212 and 222 with the cell films 11 and 12 respectively and forming the air inflating channel 23 can also be realized by other manner other than the manner of above embodiment which is achieved in a single heat sealing step, but can be realized via several heat sealing steps. In other words, the first inner extending portion 212 of the first valve film 21 and the first cell film 11 are connected by a main channel heat sealing seam 32 first in a heat sealing manner, then connect the second inner extending portion 222 of the second valve film 22 and the second cell film 12 by another main channel heat sealing seam 32 in a heat sealing manner, and then heat seal the air valve 20 and two cell films 11 and 12 together via other method, such as by the dividing seams 31, so as to form one or more air inflating channels 23 between two inner extending portions 212 and 222.

In addition, it is worth mentioning that according to this preferred embodiment of the present invention, the outer ends of the outer extending portions 211 and 221 of two valve films 21 and 22 are heat sealed together via valve film end sealing seam 33, so as to form the main channel 24 between the valve film end sealing seam 33 and the main channel heat sealing seam 32. Thus, during inflation, air enters into each air inflating channel 23 between the inner extending portions 212 and 222 of two valve films 21 and 22 through the main channel 24 between the outer extending portions 211 and 221 of two valve films 21 and 22, so as to inflate to each inflatable chamber 14.

It can be seen that according to this preferred embodiment of the present invention, the outermost dividing seams 31 of the air packaging arrangement form the edge heat sealing seams of the two sides of the air packaging arrangement. Two cell films 11 and 12 are heat sealed together by cell film end sealing seam 35 at the side far away from the air valve 20, so the outermost dividing seams 31, the valve film end sealing seam 33 and the cell film end sealing seam 35 form the edge sealing of the four sides of the air packaging arrangement.

It is worth mentioning that according to the preferred embodiment of the present invention, the air valve 20 forms the main channel 24 and the air inflating channel 23 by overlapping and heat sealing the two valve films 21 and 22. One skilled in the art will understand that the air valve 20 can be formed by folding only one film. In other words, the valve film end sealing seam 33 in the above embodiment is not requisite, and the position corresponding to the valve film end sealing seam 33 can be a folding line of the film. As can be seen in Fig. 5 of the drawings, a flexible film is folded to form two valve films 21' and 22'. Two valve films 21' and 22' are not two independent films, but are formed integrally.

Similarly, according to the above embodiment, two cell films 11 and 12 can be heat sealed together by the cell film end sealing seam 35 on the side far away from the air valve 20. As an alternative mode, two cell films 11 and 12 can be formed by folding a whole film, so the above cell film end sealing seam 35 is not necessary.

In addition, the inner extending portions 212 and 222 of two valve films 21 and 22 are respectively heat-sealed together with two cell films 11 and 12 near the entering opening of the air inflating channel 23. At the end far away from the entering opening of the air inflating channel 23, i.e. the end near to the exit of the air inflating channel 23, the inner extending portions 212 and 222 of two valve films 21 and 22 provide one or more air rejecting seams 34, which heat seal the inner extending portions 212 and 222 of two valve films 21 and 22 together at the position corresponding with the air rejecting seam 34. In other words, each heat-resisting layer 26 is not extended to the position of the air rejecting seam 34, so the inner extending portions 212 and 222 of two valve films 21 and 22 can be heat sealed together at the position of the air rejecting seam 34. As illustrated in Fig. 3 of the drawings, the air rejecting seam 34 can be provided at a position corresponding with the exit of air inflating channel 23 and being separated by a predetermined interval. Thus, the air in the inflatable chamber 14 will not be blocked by the air rejecting seam 34, so as to prevent the air from running out directly through the air inflating channel 23. The shape, size and position of the air rejecting seam 34 can be designed as required. For example, according to some embodiments, a circuitous space can be formed to prevent air from leaking by entering the air inflating channel 23 from the inflatable chamber 14.

It is worth mentioning that the air rejecting seam 34 can further heat-seal the inner extending portions 212 and 222 of two valve films 21 and 22 and one of the cell film 11 or 12, such as the cell film 11 together. Thus, while inflating, air enters into the inflatable chamber 14 from the air inflating channel 23, wherein the pressure of the air in the inflatable chamber 14 acts on the inner extending portions 212 and 222 of two valve films 21 and 22, wherein the heat sealing connection formed by the air rejecting seam 34 makes the inner extending portions 212 and 222 of two valve films 21 and 22 and the cell film 11 moving synchronously due to the swelling of the inflatable cell 13, so that the inner extending portions 212 and 222 of two valve films 21 and 22 both attach to the cell films 11, as shown in Fig. 4 of the drawings. Thus, when the pressure in the inflatable chamber 14 reach to a predetermined value, the air pressure in the inflatable chamber 14 will press the inner extending portions 212 and 222 of two valve films 21 and 22 to the inner surface of the cell film 11, so as to close the air inflating channel 23, so as to prevent the inflatable cell 13 from leaking.

In addition, two valve films 21 and 22 of the air valve 20 can be common films. Two valve films 21 and 22 of the air valve 20 can also be self- adhesive films with self-adhesion ability. Due to the self-adhesion ability of two valve films 21 and 22, while inflating, the inner extending portions 212 and 222 of two valve films 21 and 22 will attach together, so as to further prevent the air inflating channel 23 from opening. In one preferred embodiment, two valve films 21 and 22 can be self-adhesive polyethylene film, polypropylene film, polyvinyl chloride film, polyester film, polystyrene film and composite film. This kind of self-adhesive polyethylene film, polypropylene film, polyvinyl chloride film, polyester film, polystyrene film and composite film are treated by a chemical process to make the surface of the film easy to attach tightly.

It is worth mentioning that two valve films 21 and 22 of the air valve 20 can be self-adhesive films with self-adhesion ability. According to other embodiments, it is possible to keep the self-adhesive characteristic of the inner extending portions 212 and 222 of two valve films 21 and 22 and to roughen the surface of the outer extending portions 211 and 221 of two valve films 21 and 22 by adding some attachment thereon to reduce the self-adhesive ability thereof. Thus, while inflating through the air inflating opening 25 via an inflating arrangement 40, the outer extending portions 211 and 221 of two valve films 21 and 22 can be open easily, so that air can enter into the main channel 24 smoothly and open all of the air inflating channels 23.

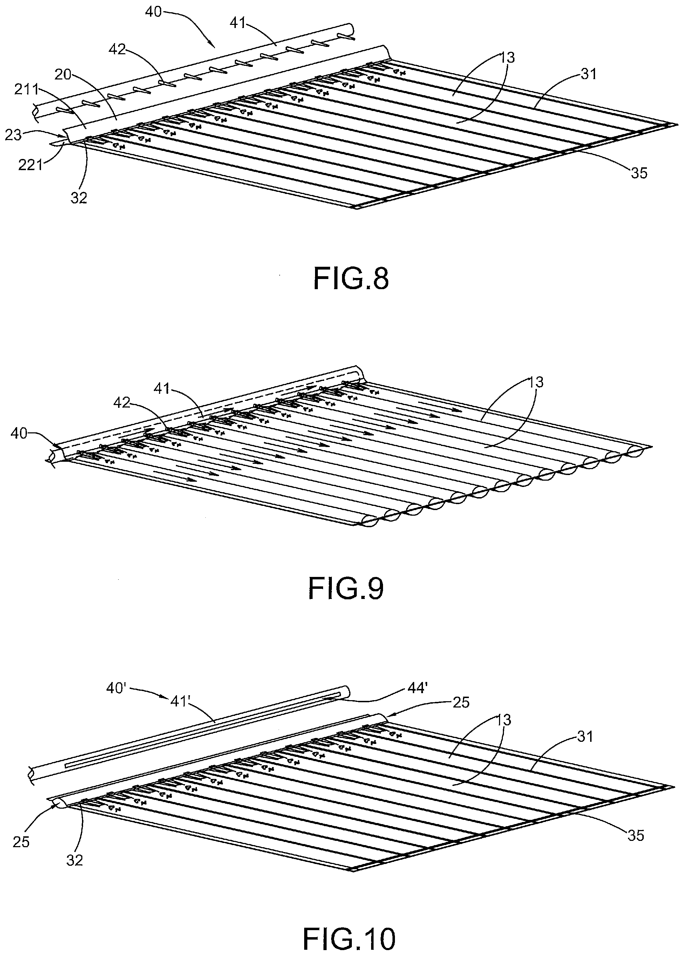

As shown in Fig. 8 and Fig. 9, according to an alternative mode of the above preferred embodiment, before inflating, the outer extending portions 211 and 221 of the air valve 20 of the air packaging arrangement are not heat sealed together by the valve film end sealing seam 33, but independent with each other and keep open. The inflating arrangement 40 comprises a main inflating tube 41 connecting to an air supplying device and a plurality of sub-inflating tubes 42 communicating with the main inflating tube 41. While inflating, the sub-inflating tubes 42 are inserted into each air inflating channel 23 directly. It is possible that the sub-inflating tubes 42 do not extend from the exit of the air inflating channel 23 to enter into the inflatable chamber 14, so air is distributed into each sub-inflating tubes 42 from the main inflating tube 41 and then enters into each corresponding the inflatable chamber 14 from each air inflating channel 23. After the pressure in the inflatable chamber 14 reach to a predetermined value, the inner extending portions 212 and 222 of two valve films 21 and 22 are pressed together, so as to form sealing to achieve the point of preventing leaking air. After the inflating is finished, the outer extending portions 211 and 221 of the air valve 20 are heat-sealed together by the heat sealing of the valve film end sealing seam 33, so as to further prevent leaking. Hence, according to this embodiment, it is not necessary for the outer extending portions 211 and 221 of the air valve 20 to form the air inflating opening 25.

In other words, according to this preferred embodiment of the present invention, the inflating manner of the air packaging arrangement can be embodied as a inflating- and-exhausting mode, wherein corresponding to each air inflating channel 23, a sub-inflating tubes 42 is provided. While inflating, just insert the corresponding number of sub-inflating tubes 42 into the air inflating channel 23.

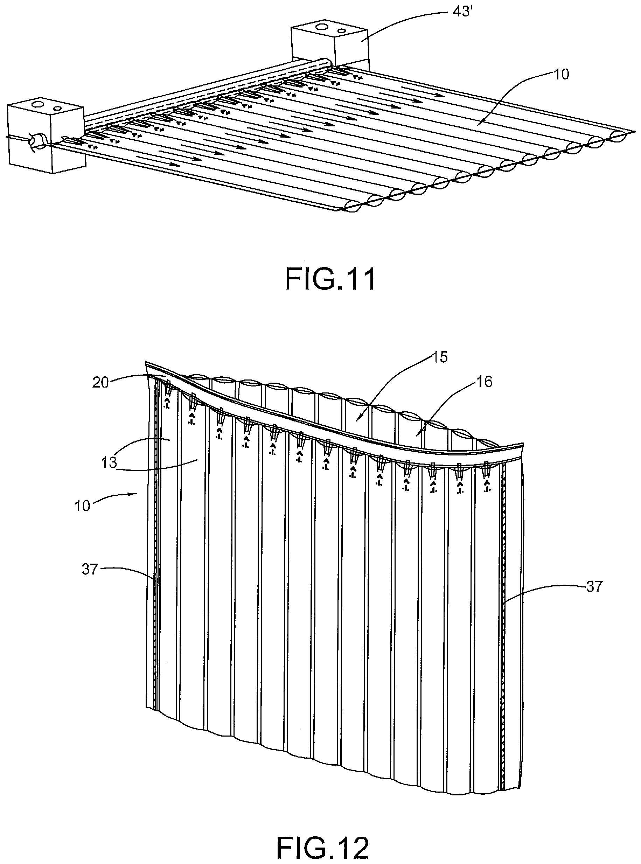

As shown in Fig. 10 and Fig. 11, according to another alternative mode of the above preferred embodiment of the present invention, the outer extending portions 211 and 221 of the air valve 20 of the air packaging arrangement are heat sealed together via the valve film end sealing seam 33, and two sides thereof form an air inflating opening 25, wherein the inflating arrangement 40' further comprises a hold-down gear 43'. The main inflating tube 41', having an inflating hole 44' extending therealong, is mounted to the main channel 24, wherein the far end of the main inflating tube 41' can extend to pass through the air inflating opening 25, wherein the hold-down gear 43' is used to compress the two ends of the main channel 24 of the air packaging arrangement which has not been inflated, so as to apply an inflating process, wherein gas coming from a gas resource device enters into the main inflating tube 41' and further enters into the main channel 24 whose two sides are sealed from the inflating hole 44', and then enters into each inflatable chamber 14 from each air inflating channel 23. After the inflating is finished, the hold-down gear 43' loosens the two ends of the main channel 24 of the air packaging arrangement, so as to get the inflated air packaging arrangement. It is worth mentioning that the structure of the above air packaging arrangement is adapted to inflate to a plurality of air packaging arrangements connecting with each other continuously, wherein after being inflated, each air packaging arrangement break open the outer extending portions 211 and 221 which connect them and break away from the main inflating tube 41'.

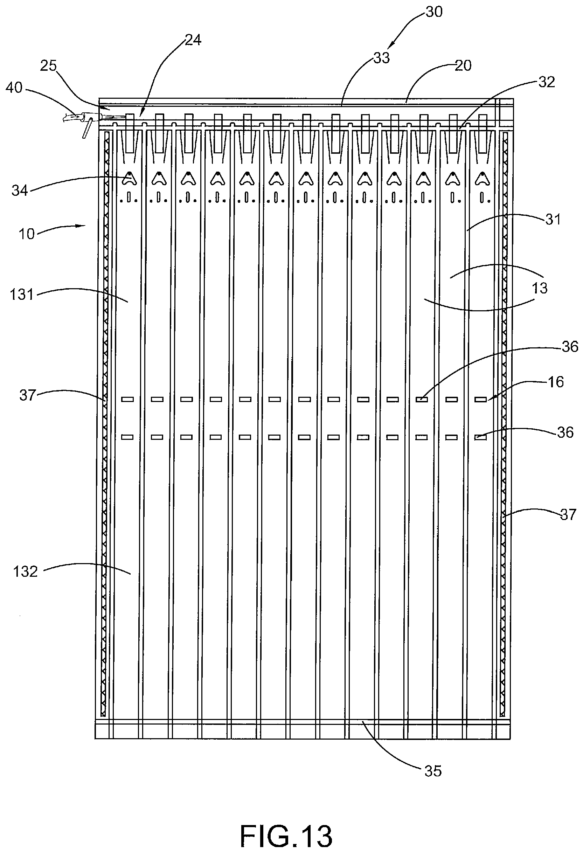

As shown in Fig. 12 and 13, according to another alternative mode of the present invention, the air packaging arrangement can be embodied as an air packaging bag, so as to be used to package packaged items directly. More specifically, the air packaging arrangement further comprises an inflatable main body 10 formed by two cell films 11 and 12 and the air valve 20 formed by two valve films 21 and 22, wherein the air valve 20 is used to inflate to each inflatable cell 13 of the inflatable main body 10.

According to this preferred embodiment of the present invention, the inflatable main body 10 is given a series of steps of heat-sealing and bending to form the air packaging bag having a containing cavity 15. Thus, packaged items can be placed into the containing cavity 15, so that the air packaging arrangement can provide air cushioning effect around the packaged items. The shape and size of the air packaging arrangement can be designed as required. According to the example illustrated in Fig. 12 and Fig. 13, the air packaging arrangement can form a U-shaped packaging bag. One skilled in the art will understand that, the example illustrated above is not the limitation to the present invention. One skilled in the art can design other types of air packaging bags having the containing cavity 15.

Correspondingly, according to this preferred embodiment of the present invention, two cell films 11 and 12 have not extended to the position of the main channel 24, but connect with two valve films 21 and 22 partially in the heat sealed manner, so that the main channel 24 is formed only by the valve films 21 and 22.

In addition, each inflatable cell 13 of the inflatable main body 10 has a plurality of bending seams 36 heat-sealing two cell films 11 and 12. As shown in Fig. 13, each inflatable cell 13 can be provided with two bending seams 36, so as to divide each inflatable cell 13 into three sub-inflatable cells 131 connected with each other. It is worth mentioning that the positions of these bending seams 36 of these inflatable cells 13 are correspondent. In other words, the inflatable main body 10 equivalently has two lines of bending seams 36 dividing with each other. The bending seams 36 provided to the inflatable cells 13 are arranged along straight lines but are not continued with each other, so an inflatable side wall is formed between the two lines of bending seams 36, so that the packaging box having air cushioning effect forms a plurality of side walls. These side walls form the containing cavity 15 after being folded, which is used to contain packaged items. In other words, the inflatable main body 10 has more than one line of bending seams 36 which are used to bend, wherein the bending seams 36 can be arranged to form nodal lines which are provided alternatively, so that these inflatable cells 13 can be bent along these bending seams 36, so that the sub-inflatable cells 131 of the inflatable main body 10 respectively form a plurality of inflatable side walls. One skilled in the art will understand that the amount of the lines of the bending seams 36 of the inflatable main body 10 can be set as required, so as to obtain an ideal amount of inflatable side walls.

Further, each bending seam 36 can provided at the middle position of the corresponding inflatable cell 13, and there is a predetermined interval between two dividing seams 31 adjacent to each other, so as to form communicating channels 16 between two sub-inflatable cells 131 adjacent to each other. Thus, during inflation, air enters into each inflatable cell 13 from each air inflating channel 23, wherein the air can be distributed to each sub-inflatable cell 131 of the same inflatable cell 13. In addition, it is possible that the bending seams 36 are not provided at the middle position of the corresponding the inflatable cell 13 but integrally formed with the dividing seams 31, and the communicating channel 16 is formed at the middle position of the inflatable cell 13.

In addition, according to this preferred embodiment of the present invention, after the inflatable main body 10 is bent along two lines of the bending seams 36, the inflatable side wall between two lines of the bending seams 36 forms a bottom side wall, a front side wall and a rear side wall are respectively formed to two sides of the bottom side wall, wherein the front side wall and the rear side wall are further heat sealed by two side sealing seams 37 on two sides, so that the two sides of the inflatable main body 10 are heat sealed together, so as to form the containing cavity 15, wherein one end of the containing cavity 15 has an opening 16. It is understandable that the side sealing seams 37 can not only be continuous heat sealing seams but also dividing heat sealing seams. The side sealing seams 37 can be provided to the outmost dividing seams 31 on the inflatable main body 10. Also, the side sealing seams 37 can be formed via once heat sealing both the outmost dividing seams 31 and the side sealing seams 37. Or, the side sealing seams 37 can be an additional heat sealing seam differing from the outmost dividing seams 31.

In other words, the heat sealing seams 30 according to the present invention comprise first heat sealing seams and second heat sealing seams, wherein the first heat sealing seams are used to form flat cushioning material. The second heat sealing seams are used to make the flat cushioning material formed by the first heat sealing seams to form a volumetric packaging material having the containing cavity 15. According to this preferred embodiment of the present invention, the side sealing seams 37 belongs to heat sealing seams, wherein two sides of the front side wall and the rear side wall formed by bending the inflatable side wall are heat sealed together by the second heat sealing seams, i.e. the side sealing seams 37, so as to form the containing cavity 15. The packaged items are adapted to be placed to the containing cavity 15. The surrounding inflatable side walls provide air cushioning effect for the packaged items.

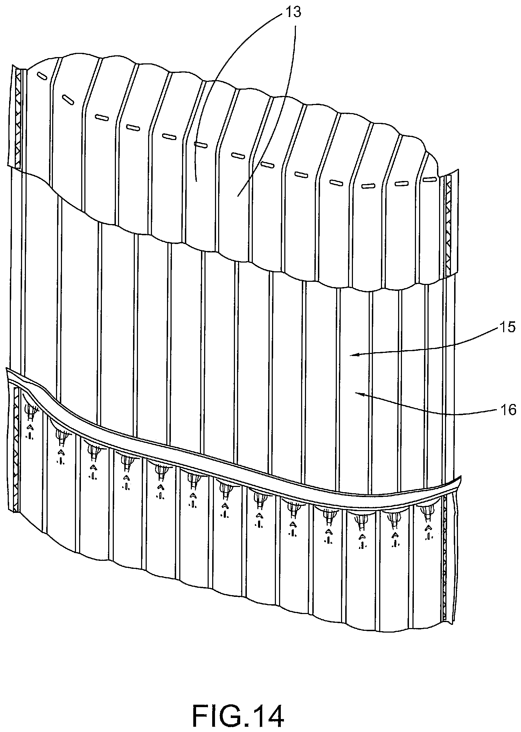

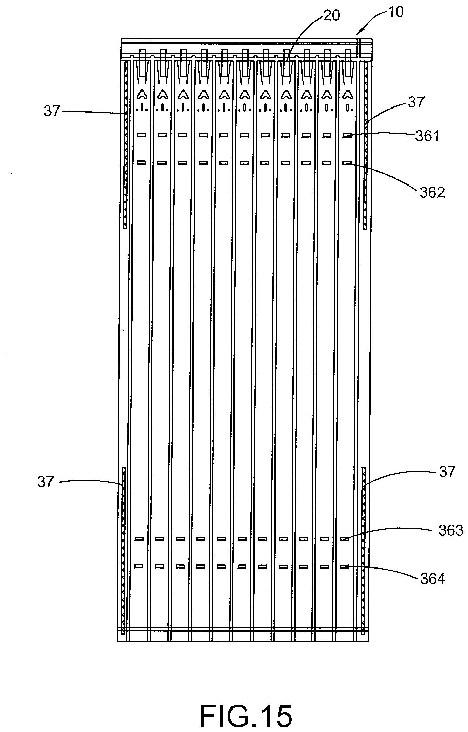

As shown in Fig. 14 and Fig. 15, according to another alternative mode, the air packaging arrangement comprises at least four lines of the bending seams 36, i.e. a first line of bending seams 361, a second line of bending seams 362, a third line of bending seams 363 and a fourth line of bending seams 364. Two side walls are respectively formed between the first and second lines of bending seams 361 and 362 and between the third line of and the fourth line of bending seams 363 and 364. A bottom side wall is formed between the second line of and the third line of bending seams 362 and 363. A top side wall is formed between the first line of and the opening 16 of the containing cavity 15 and between the fourth line of bending seams and the opening 16 of the containing cavity 15. Thus, the whole air packaging arrangement has a substantially C shape, wherein the opening 16 is not on one end of the containing cavity 15, but a substantially central area of the top side walls.

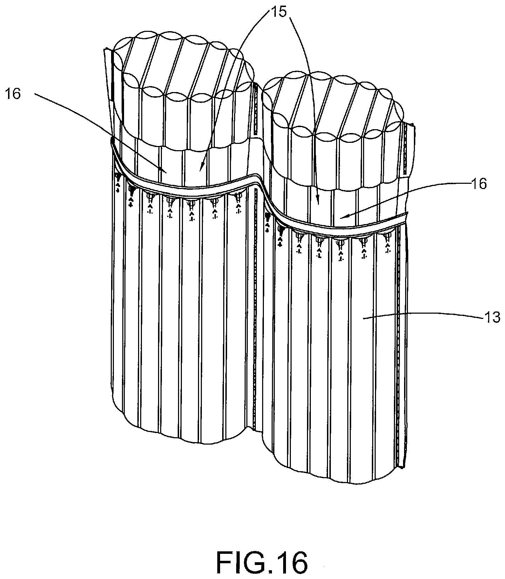

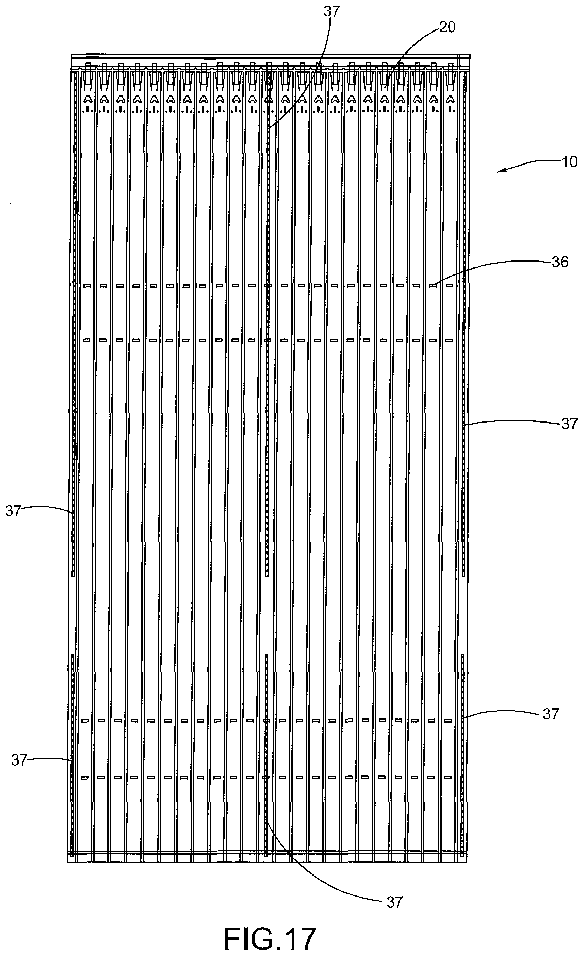

As shown in Fig. 16 and Fig. 17, according to another alternative mode, the air packaging arrangement can have a substantially O shape, and the opening 16 is formed to the side of the air packaging arrangement but near to one end of the air packaging arrangement. According to this embodiment, a plurality of the containing cavities 15 can be formed, so that the air packaging arrangement is suited for containing a plurality of packaged items.

The air packaging arrangement can be used independently to provide air cushioning effect for packaged items. The air packaging arrangement can be used together with other packaging devices. In other word, packaged items can be put into the containing cavity 15 of the air packaging arrangement, then the air packaging arrangement carrying the packaged items is put into another packaging box, so as to provide protection effects for the packaged items, so as to provide convenience to the storing and transporting of the packaged items.

Correspondingly, the present invention provide a manufacturing method of an air packaging arrangement, wherein the manufacturing method comprises the following steps:
(a) overlapping the inner extending portions 212 and 222 of at least two valve films 21 and 22 and arranging the inner extending portions 212 and 222 of the valve films 21 and 22 between at least two cell films 11 and 12, and overlapping the outer extending portions 211 and 221 of two valve films 21 and 22 and arranging the outer extending portions 211 and 221 of the two valve films 21 and 22 outside the two cell films 11 and 12; and
(b) forming an inflatable main body 10 having one or more inflatable cells 13 via a series of heat sealing seams 30, wherein a main channel 24 is formed between the outer extending portions 211 and 221 of the two valve films 21 and 22, wherein one or more air inflating channel 23 corresponding with each inflatable cell 13 are formed between the inner extending portions 212 and 222, wherein while inflating, air enters into each air inflating channel 23 from the main channel 24, wherein when the pressure in the inflatable chamber 14 of each inflatable cell 13 reach to a predetermined value, inner extending portions 212 and 222 of the two valve films 21 and 22 attach to one of the cell films 11 or 12, wherein the air inflating channel 23 is closed to prevent leaking air.

The step (b) of the above manufacturing method further comprises the following steps: connecting two valve films 21 and 22 respectively with two cell films 11 and 12 in a heat sealing manner via a continuous main channel heat sealing seam 32 formed via a heat sealing process at the position of the entrance of the air inflating channel, wherein a heat-resisting layer 26 can be provided between the two valve films 21 and 22 so as to ensure the forming of the air inflating channel 23 ; forming continuous valve film end sealing seam 33 via connecting the outer extending portions 211 and 221 of two valve films 21 and 22 in a heat sealing manner; forming more than one line of dividing seams 31 via a heat sealing process, so that the air packaging arrangement forms a plurality of inflatable cells 13; forming a one or more lines of bending seams 36 by connecting two cell films 11 and 12 via a heat sealing process, wherein the air packaging arrangement is suitable to be bended along the bending seams 36 to form a plurality of inflatable side wall ; and make the air packaging arrangement to form an air packaging bag having a spatial configuration via the heat sealing of twice heat sealing seams 37.

In addition, in the step (a), the two valve films 21 and 22 and the two cell films 11 and 12 can be independent films or a whole film which is folded.

According to another aspect of the present invention, the present invention provides an inflating method of an air packaging arrangement, wherein the inflating method comprises the following steps:
(A) Filling air into the main channel 24 formed between outer extending portions 211 and 221 of two valve films 21 and 22;
(B) Guiding the air in the main channel 24 into the air inflating channel 23 formed between inner extending portions 212 and 222 of two valve films 21 and 22 and into the inflatable chamber 14 of one or more inflatable cells 13 through the air inflating channel 23.
(C) While the pressure in the inflatable chamber 14 reach to a predetermined value, inner extending portions 212 and 222 of two valve films 21 and 22 attach to one of the cell films 11 or 12 to close the air inflating channel 23.

In this inflating method according to the present invention, air enters into the main channel 24 formed by the air valve 20 and then enters into the air inflating channel 23 formed by the air valve 20 and then enters into each inflatable chamber 14, so that the inflating is more smooth.

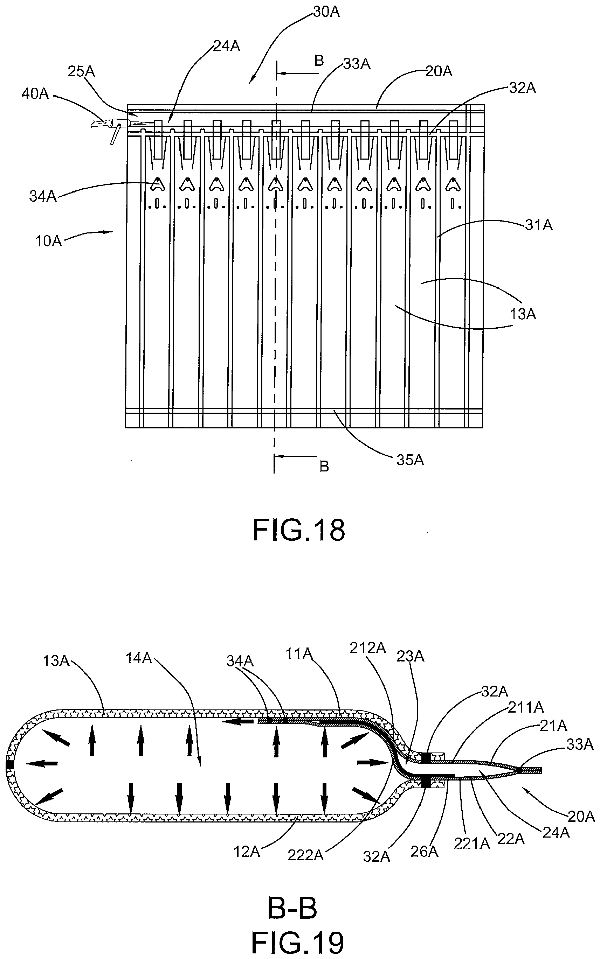

Figs. 18 to 22 illustrate a fluid container according to a second preferred embodiment of the present invention, wherein the fluid can be gas or liquid. In other words, according to this preferred embodiment of the present invention, the fluid is not limited to gas as recited in the above second preferred embodiment. More specifically, the fluid is embodied as gas, wherein the gas is selected from air, oxygen, carbon dioxide, nitrogen, hydrogen, rare gas and mixture gas. The fluid container storing gas is used to provide cushioning effect, or just is used to store gas, for example to store oxygen to be used to where needs oxygen. If the fluid is embodied as liquid, such as water, the fluid container can store water and the fluid container can be used to provide cushioning effect to keep warm. One skilled in the art will understand that the above species of gas and liquid are only example to the present invention but not a limitation.

Specifically, the fluid container comprises at least one fluid storing main body 10A, wherein the fluid storing main body 10A comprises two fluid storing films, i.e. a first fluid storing film 11A and a second fluid storing film 12A, so as to form at least one fluid storing cell 13A. The fluid container further comprises at least one check valve 20A, so as to fill fluid to the fluid storing cell 13A.

The fluid storing cell 13A is mainly formed by the two fluid storing films, i.e. the first fluid storing film 11A and the second fluid storing film 12A, wherein the first fluid storing film 11A and the second fluid storing film 12A can be two flexible films, which can be made of various proper materials, such as polyethylene film, polypropylene film, polyvinyl chloride film, polyester film, polystyrene film, and composite film. There is no limitation in this respect according to the present invention. All proper flexible films can be used to make the fluid storing films. The first fluid storing film 11A and the second fluid storing film 12A overlap with each other and are heat-sealed together to form a fluid storing chamber 14A of the fluid storing cell 13A, wherein the fluid storing chamber 14A is used to store fluid.

The check valve 20A is used to fill fluid to the fluid storing cell 13A. In other words, while filing fluid, fluid enters into the fluid storing chamber 14A of each fluid storing cell 13A through the check valve 20A. After the pressure in the fluid storing chamber 14A meets requirement, the filling process is stopped.

It is worth mentioning that, according to the preferred embodiment of the present invention, the check valve 20A is a one-way valve. In other words, during filling fluid, after the pressure in the fluid storing chamber 14A reaches to a predetermined value, the pressure in the fluid storing chamber 14A will close the check valve 20A, so the filling will stop and the fluid in the fluid storing chamber 14A will not easily leak through the check valve 20A.

More specifically, the check valve 20A comprises two valve films, i.e. a first valve film 21A and a second valve film 22A. In similar, the first valve film 21A and the second valve film 22A can be two flexible films, which are able to be made of various proper materials, such as polyethylene film, polypropylene film, polyvinyl chloride film, polyester film, polystyrene film, and composite film. There is no limitation in this respect according to the present invention. All proper flexible films are able to be used to make the valve films.

According to this preferred embodiment of the present invention, the first valve film 21A and the second valve film 22A overlap with each other. After the first valve film 21A, the second valve film 22A, the first fluid storing film 11A and the second fluid storing film 12A being arranged, the two valve films 21A, 22A and the two fluid storing films 11A, 12A are heat sealed by a series of proper heat sealing seams 30A to form structure which can be filled with fluid. The heat sealing seams 30A are formed via proper heat-sealing process, so that two or more films are heat sealed at required positions.

More specifically, the first valve film 21A and the second valve film 22A overlap with each other and are heat-sealed to form at least one fluid filling channel 23A and a main channel 24A and to form a fluid filling opening 25A which is used to fill fluid, wherein the fluid filling channel 23A and the main channel 24A communicate with each other. During filling, users can use a fluid filling device 40A, such as a fluid filling pump to fill fluid to the fluid container through the fluid filling opening 25A. The fluid enters into the main channel 24A through the fluid filling opening 25A, and enters into each fluid filling channel 23A through the main channel 24A, so as to fill fluid to the fluid storing chamber 14A.

It is worth mentioning that the heat sealing seams 30A comprise a plurality of dividing seams 31A separating with each other, so that two or more fluid storing cells 13A connect with each other in a side by side manner to form the fluid storing main body 10A, wherein the check valve 20A is provided to each fluid storing cell 13A correspondingly. In other words, each fluid storing cell 13A is able to be filled independently. An extending dividing seam31 is formed between two of the fluid storing cells 13A, wherein the dividing seam 31 can be a heat-sealing line between two of the fluid storing cells 13A adjacent to each other, so as to form a plurality of independent fluid storing chambers 14A via these dividing seams 31A. Hence, if one of the fluid storing cells 13A is damaged to leak fluid, other fluid storing cells 13A will not be affected. It is worth mentioning that the fluid storing cells 13A can also communicate with each other, so that only one check valve 20A is enough to fill fluid to all of the fluid storing cells 13A. In other words, the fluid container according to the present invention can form a plurality of the fluid storing cells 13A via heat-sealing the first fluid storing film 11A and the second fluid storing film 12A.

Corresponding with every fluid storing cell 13A, the check valve 20A forms one fluid filling channel 23A. That is to say, when the dividing seams 31A heat-seal the two fluid storing films 11A and 12A, the dividing seams 31A heat-seal the two valve films 21A and 22A at the same time, so that the four films are heat-sealed together to form the fluid filling channels 23A and the fluid storing chambers 14A, wherein through each fluid filling channel 23A, fluid is suitable to be filled to the corresponding fluid storing chamber 14A.

It is worth mentioning that the dividing seams 31A, which are spacedly arranged with each other, can be arranged with equal distances to form the fluid storing cells 13A with the same size. Of course, the dividing seams 31A can also arrange with unequal distance to form the fluid storing cells 13A with different sizes. The dividing seams 31A can be parallel with each other. According to the present invention, there is no limitation in this aspect. It is possible that a predetermined number of dividing seams 31A are arranged aslant or to form a turning in partial. Each fluid storing cell 13A can form one fluid filling channel 23A. Two or more fluid filling channels 23A can be formed in a relative big fluid storing cell 13A by heat-sealing technology, so as to improve filling efficiency.

In addition, the shape of each fluid storing cell 13A is able to change after being filled with fluid, so the fluid storing main body 10A can be made to form various shapes and sizes. The fluid storing cell 13A can be strip shaped, such as crosswise strip shaped, and lengthways strip shaped, or bulk block shaped,. It is worth mentioning that the shape is not limitation. In the preferred embodiment, the fluid storing cell 13A can be formed to have a strip structure.

According to this preferred embodiment of the present invention, the main channel 24A is formed by the check valve 20A, which equal to a fluid distributing channel. While filling, fluid enters into the main channel 24A through the fluid filling opening 25A, and then enters into each fluid filling channel 23A through the main channel 24A, so that the fluid is filled to the corresponding fluid storing chamber 14A through each fluid filling channel 23A. When the fluid pressure in the fluid storing chamber 14A reach to a predetermined value, the pressure in the fluid storing chamber 14A acts on the two valve films 21A and 22A to close the fluid filling channel 23A, so as to avoid the fluid from running out of the fluid filling channel 23A to enter into the main channel 24A, i.e. to prevent the fluid in the fluid storing chamber 14A from leaking.

Thus, according to the preferred embodiment of the present invention, while filing fluid to each fluid storing chamber 14A, fluid is only distributed between the two valve films 21A and 22A. It is different from the prior art as illustrated in Fig. 1 and Fig. 2 of the drawings, according to which, fluid will enter into the main channel 1D between two outer films 1A and 1B and then enter into the filling channel 2C. According to the prior art, it may be occur that fluid enters between an outer film and an inner film adjacent to each other, such as between the outer film 1A and the inner film 2A from the space between two heat-sealing points 1E adjacent to each other, so that the filling effect is affected. According to the present invention, fluid only enters between two valve films 21A and 22A, and will not enters between one valve film and one fluid storing film as effected by the two fluid storing films 11A and 12A, so as to ensure the smoothness of the filling.

More specifically, according to the preferred embodiment of the present invention, it is different from the prior art as illustrated in Fig. 1 and Fig. 2 of the drawings, according to which, two inner films 2A and 2B are fully provided between the two outer films 1A and 1B. According to the present invention, two valve films 21A and 22A of the check valve 20A are only partially overlap with two fluid storing films 11A and 12A. As illustrated in Fig. 4 of the drawings, the first valve film 21A and the first fluid storing film 11A overlap with each other partially, wherein the second valve film 22A and the second fluid storing film 12A overlap with each other partially. Compare with the prior art illustrated in Fig. 1 and Fig. 2, the fluid packaging arrangement according to the present invention decrease the size of the fluid storing films 11A and 12A, so as to save more materials.

Correspondingly, two valve films 21A and 22A of the check valve 20A respectively comprise two outer extending portions 211A and 221A and two inner extending portions 212A and 222A. That is to say, the first valve film 21A comprises a first outer extending portion 211A and a first inner extending portion 212A, wherein the second valve film 22A comprises a second outer extending portion 221A and a second inner extending portion 222A. The first outer extending portion 211A and the first inner extending portion 212A are formed integrally by extending in the length direction, wherein the second outer extending portion 221A and the second inner extending portion 222A are also formed integrally by extending in the length direction.

According to the preferred embodiment of the present invention, the outer extending portions 211A and 221A of two valve films 21A and 22A overlap with each other to form the main channel 24A having the fluid filling opening 25A. The inner extending portions 212A and 222A of two valve films 21A and 22A overlap with each other and overlap with two fluid storing films 11A and 12A, so as to form each fluid filling channel 23A between the inner extending portions 212A and 222A after a heat sealing process is applied.

In other words, according to the present invention, the fluid storing films 11A and 12A have not extended to the position of the main channel 24A. Instead, the fluid storing films 11A and 12A are overlapped at a partial position of the check valve 20A and are heat sealed together. Thus, it is not necessary to connect an outer film and an inner film adjacent to each other in the heat sealing manner as the prior art illustrated in Fig. 1 and Fig. 2, so the making process is simple. Because there is only one outer extending portion 211A or 221A on both sides of the main channel 24A, while filing fluid, after fluid enters into the main channel 24A, the outer extending portions 211A and 221A of two valve films 21A and 22A can be swelled easily, so as to open the fluid filling channel 23A entering into each fluid storing cell 13A.

It is understandable that the inner extending portions 212A and 222A of two valve films 21A and 22A are provided between two fluid storing films 11A and 12A, and the inner extending portions 212A and 222A adjacent to each other are connected with the fluid storing films 11A and 12A respectively via the main channel heat sealing seam 32A, but two inner extending portions 212A and 222A are prevent from being heat sealed together by the main channel heat sealing seam 32A, so as to form each fluid filling channel 23A which can be filled with fluid between the inner extending portions 212A and 222A. Corresponding to the dividing seams 31A, each fluid filling channel 23A is formed with two side walls. Such separating manner can be realized by providing a separating device, such as a block plate between two inner extending portions 212A and 222A in the heat sealing step, so as to prevent the two inner extending portions 212A and 222A from being heal sealed together when forming the main channel heat sealing seam 32A. Preferably, the inner surface of at least one of two inner extending portions 212A and 222A is attached with one heat-resisting layer 26A, such as silicone oil, PVA, high temperature durable and adhering resisting ink, so that while forming the main channel heat sealing seam 32, the inner extending portions 212A and 222A adjacent to each other are respectively connected with the fluid storing films 11A and 12A in a heat sealing manner, but two inner extending portions 212A and 222A are not heat sealed together by the main channel heat sealing seam 32A, so as to form the fluid filling channel 23A.

It is worth mentioning that the step of the inner extending portions 212A and 222A respectively connecting with the fluid storing films 11A and 12A and forming the fluid filling channel 23A can also be realized by other manners other than the above embodiment in which a single heat sealing step is required, but can be realized via several heat sealing steps. In other words, the first inner extending portion 212A of the first valve film 21A and the first fluid storing film 11A are connected by a main channel heat sealing seam 32A first in a heat sealing manner, then connect the second inner extending portion 222A of the second valve film 22A and the second fluid storing film 12A by another main channel heat sealing seam 32A in a heat sealing manner, and then heat seal the check valve 20A and two fluid storing films 11A and 12A together via other methods, such as by the dividing seams 31A, so as to form one or more fluid filling channels 23A between two inner extending portions 212A and 222A.

It is worth mentioning that according to this preferred embodiment of the present invention, the outer ends of the outer extending portions 211A and 221A of two valve films 21A and 22A are heat sealed together via valve film end sealing seam 33A, so as to form the main channel 24A between the valve film end sealing seam 33A and the main channel heat sealing seam 32A. Thus, while filing fluid, fluid enters into each fluid filling channel 23A between the inner extending portions 212A and 222A of two valve films 21A and 22A through the main channel 24A between the outer extending portions 211A and 221A of two valve films 21A and 22A, so as to fill fluid to each fluid storing chamber 14A.

It can be seen that, according to this preferred embodiment of the present invention, the outermost dividing seams 31A of the fluid packaging arrangement form the edge heat sealing of the two sides of the fluid packaging arrangement. Two fluid storing films 11A and 12A are heat sealed together by fluid storing film end sealing seam 35A at the side far away from the check valve 20A, so the outermost dividing seams 31A, the valve film end sealing seam 33A and the fluid storing film end sealing seam 35A form the edge sealing of the four sides of the fluid packaging arrangement.

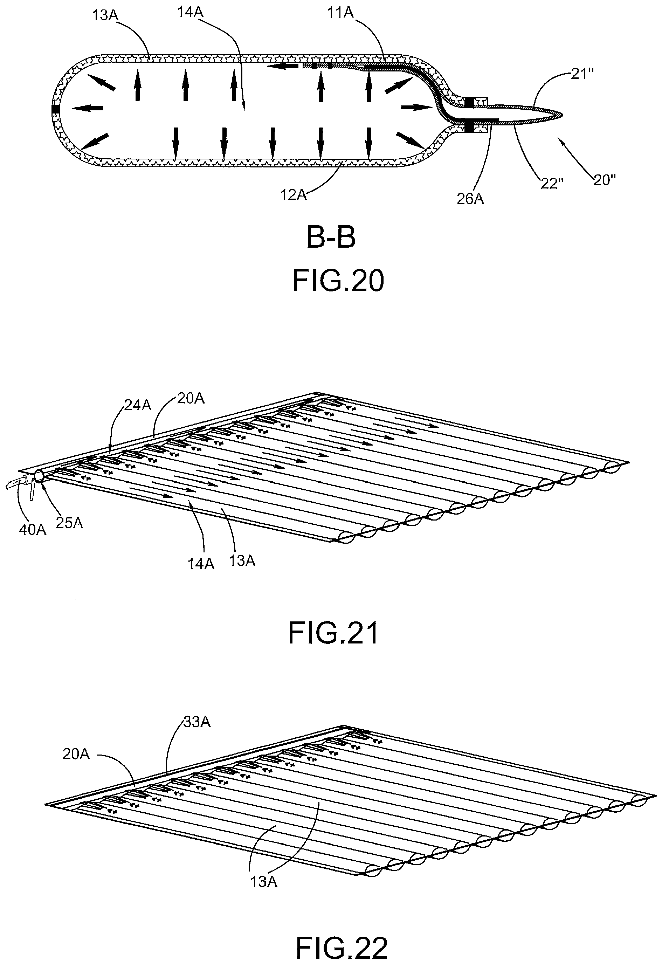

It is worth mentioning that, according to the preferred embodiment of the present invention, the check valve 20A forms the main channel 24A and the fluid filling channel 23A by overlapping and heat sealing the two valve films 21A and 22A. One skilled in the art will understand that the check valve 20A can be formed by folding only one film. In other words, the valve film end sealing seam 33A in the above embodiment is not requisite, and at the position corresponding to the valve film end sealing seam 33A, there can be a folding line of the film. As can be seen in Fig. 20 of the drawings, a flexible film is folded to form two valve films 21" and 22". Two valve films 21" and 22" are not two independent films, but are formed integrally.

Similarly, according to the above embodiment, two fluid storing films 11A and 12A can be heat sealed together by the fluid storing film end sealing seam 35A on the side far away from the check valve 20A. As an alternative mode, two fluid storing films 11A and 12A can be formed by folding a whole film, so the above fluid storing film end sealing seam 35A is not necessary.

In addition, the inner extending portions 212A and 222A of two valve films 21A and 22A are respectively heat sealed together with two fluid storing films 11A and 12A near the entering opening of the fluid filling channel 23A. At the end far away from the entering opening of the fluid filling channel 23A, i.e. the end near to the exit of the fluid filling channel 23A, the inner extending portions 212A and 222A of two valve films 21A and 22A provide one or more blocking seams 34A, which heat seal the inner extending portions 212A and 222A of two valve films 21A and 22A together at the position corresponding with the blocking seams 34A. In other words, each heat-resisting layer 26A is not extended to the position of the blocking seams 34A, so the inner extending portions 212A and 222A of two valve films 21A and 22A can be heat sealed together at the position of the blocking seams 34A. As illustrated in Fig. 18 of the drawings, the blocking seams 34A can be provided at a position corresponding to the exit of fluid filling channel 23A and being separated by a predetermined interval. Thus, the fluid in the fluid storing chamber 14A will not be blocked by the blocking seams 34A, so as to prevent the fluid from running out directly through the fluid filling channel 23A. The shape, size and position of the blocking seams 34A can be designed as required. For example, according to some embodiments, a circuitous space can be formed to prevent fluid from leaking by entering the fluid filling channel 23A from the fluid storing chamber 14A.

It is worth mentioning that the blocking seams 34A can further heat seal the inner extending portions 212A and 222A of two valve films 21A and 22A and one of the fluid storing films 11 and 12, such as the fluid storing film 11 together. Thus, while filing fluid, fluid enters into the fluid storing chamber 14A from the fluid filling channel 23A, wherein the pressure of the fluid in the fluid storing chamber 14A acts on the inner extending portions 212A and 222A of two valve films 21A and 22A, wherein the heat sealing connecting formed by the blocking seams 34A makes the inner extending portions 212A and 222A of two valve films 21A and 22A and the fluid storing film 11 moving synchronously due to the swelling of the fluid storing cell 13A, so that the inner extending portions 212A and 222A of two valve films 21A and 22A both attach to the fluid storing films 11, as shown in Fig. 19 of the drawings. Thus, when the pressure in the fluid storing chamber 14A reach to a predetermined value, the pressure in the fluid storing chamber 14A will press the inner extending portions 212A and 222A of two valve films 21A and 22A to the inner surface of the fluid storing film 11, so as to close the fluid filling channel 23A, so as to prevent the fluid storing cell 13A from leaking.

In addition, two valve films 21A and 22A of the check valve 20A can be common films. Two valve films 21A and 22A of the check valve 20A can also be self-adhesive films with self-adhesion ability. Due to the self-adhesion ability of two valve films 21A and 22A, while filing fluid, the inner extending portions 212A and 222A of two valve films 21A and 22A will attach together, so as to further prevent the fluid filling channel 23A from opening. In one preferred embodiment, two valve films 21A and 22A can be self-adhesive polyethylene film, polypropylene film, polyvinyl chloride film, polyester film, polystyrene film and composite film. This kind of self-adhesive polyethylene film, polypropylene film, polyvinyl chloride film, polyester film, polystyrene film and composite film are treated by a chemical process to make the surface of the film easy to attach tightly.

It is worth mentioning that two valve films 21A and 22A of the check valve 20A can be self- adhesive films with self-adhesion ability. According to other embodiments, it is possible to keep the self-adhesive characteristic of the inner extending portions 212A and 222A of two valve films 21A and 22A and to roughen the surface of the outer extending portions 211A and 221A of two valve films 21A and 22A by adding some attachment thereon to decrease the self-adhesive ability thereof. Thus, while filing fluid through the fluid filling opening 25A via a fluid filling device 40A, the outer extending portions 211A and 221A of two valve films 21A and 22A can be open easily, so that fluid can enter into the main channel 24A smoothly and open all of the fluid filling channels 23A.

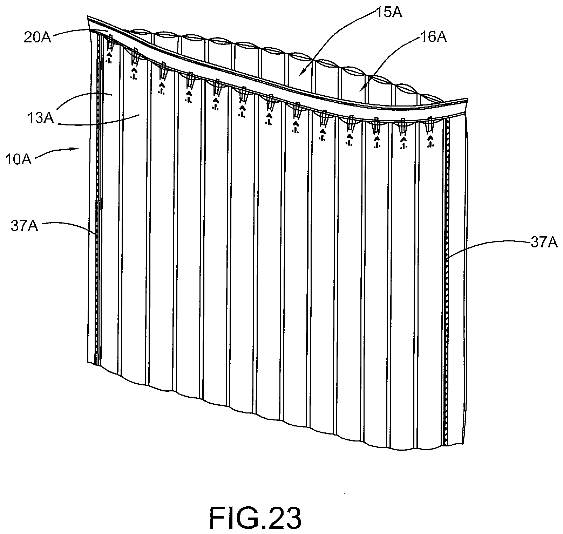

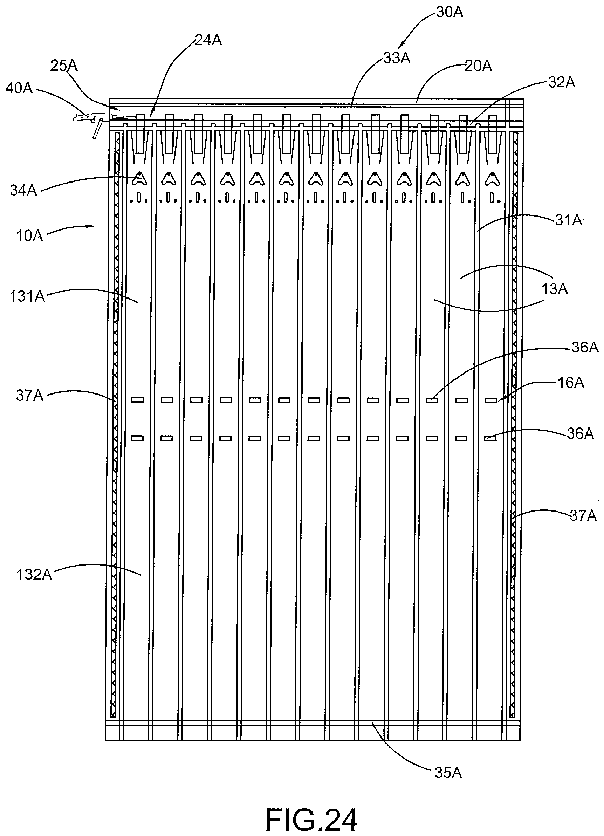

As shown in Figs. 23 and 24, according to another alternative mode of the present invention, the fluid packaging arrangement can be embodied as a fluid packaging bag, so as to be used to store packaged items directly. More specifically, the fluid packaging arrangement further comprises a fluid storing main body 10A formed by two fluid storing films 11A and 12A and the check valve 20A formed by two valve films 21A and 22A, wherein the check valve 20A is used to fill fluid to each fluid storing cell 13A of the fluid storing main body 10A.

According to this preferred embodiment of the present invention, the fluid storing main body 10A is given a series of steps of heat-sealing and bending to form the fluid packaging bag having a containing cavity 15. Thus, packaged items can be placed into the containing cavity 15, so that the fluid packaging arrangement can provide fluid cushioning effect around the packaged items. The shape and size of the fluid packaging arrangement can be designed as required. According to the example illustrated in Fig. 23 and Fig. 24, the fluid packaging arrangement can form a U-shaped packaging bag. One skilled in the art will understand that, the example illustrated above is not the limitation to the present invention. One skilled in the art can design other types of fluid packaging bags having the containing cavity 15A.

Correspondingly, according to this preferred embodiment of the present invention, two fluid storing films 11A and 12A have not extended to the position of the main channel 24A, but connect with two valve films 21A and 22A partially in the heat sealing manner, so that the main channel 24A is formed only by the valve films 21A and 22A.

In addition, each fluid storing cell 13A of the fluid storing main body 10A has a plurality of bending seams 36A heat-sealing two fluid storing films 11A and 12A. As shown in Fig. 23, each fluid storing cell 13A is provided with two bending seams 36A, so as to divide each fluid storing cell 13A into three sub-fluid storing cells 131A connecting with each other. It is worth mentioning that the positions of these bending seams 36A of the fluid storing cells 13A are correspondent. In other words, the fluid storing main body 10A equivalently has two lines of bending seams 36A dividing with each other. The bending seams 36A provided to the fluid storing cells 13A are arranged along straight lines but not continues with each other, so a fluid filling wall is formed between the two lines of bending seams 36A, so that the packaging box having fluid cushioning effect forms a plurality of side walls. These side walls form the containing cavity 15A after being folded, which is used to contain packaged items. In other words, the fluid storing main body 10A has more than one line of bending seams 36A which are used to bend, wherein the bending seams 36A can be arranged to form nodal lines which are provided alternatively, so that these fluid storing cells 13A can be bent along these bending seams 36A, so that the sub-fluid storing cells 131A of the fluid storing main body 10A respectively form a plurality of fluid filling walls. One skilled in the art will understand that the amount of the lines of the bending seams 36A of the fluid storing main body 10A can be set as required, so as to obtain an ideal amount of the fluid filling walls.

Further, each bending seam 36A is provided at the middle position of the corresponding fluid storing cell 13A, and there is predetermined interval between two dividing seams 31A adjacent to each other, so as to form communicating channels 16 between two sub-fluid storing cells 131A adjacent to each other. Thus, while filing fluid, fluid enters into each fluid storing cell 13A from each fluid filling channel 23A, wherein the fluid can be distributed to each sub-fluid storing cell 131A of the same fluid storing cell 13A. In addition, it is possible that the bending seams 36A are not provided to the middle position of the corresponding the fluid storing cell 13A but integrally formed with the dividing seams 31A, and the communicating channel 16 is formed at the middle position of the fluid storing cell 13A.

In addition, according to this preferred embodiment of the present invention, after the fluid storing main body 10A is bent along two lines of the bending seams 36A, the fluid filling wall between two lines of the bending seams 36A forms a bottom side wall. A front side wall and a rear side wall are respectively formed to two sides of the bottom side wall, wherein the front side wall and the rear side wall further heat sealed by two side sealing seams 37A on two sides, so that the two sides of the fluid storing main body 10A are heat sealed together, so as to form the containing cavity 15A, wherein one end of the containing cavity 15A has an opening 16A. It is understandable that the side sealing seams 37A can not only be continuous heat sealing seams but also dividing heat sealing seams. The side sealing seams 37A can be provided to the outmost dividing seams 31A on the fluid storing main body 10A. Also, the side sealing seams 37A can be formed via once heat sealing both the outmost dividing seams 31A and the side sealing seams 37A. Or, the side sealing seams 37A can be an additional heat sealing seam differing from the outmost dividing seams 31A.

In other words, the heat sealing seams 30A according to the present invention comprise first heat sealing seams and second heat sealing seams, wherein the first heat sealing seams are used to form flat cushioning material. The second heat sealing seams are used to make the flat cushioning material formed by the first heat sealing seams to form a volumetric packaging material having the containing cavity 15A. According to this preferred embodiment of the present invention, the side sealing seams 37A belongs to the second heat sealing seams, wherein two sides of the front side wall and the rear side wall formed by bending the fluid filling wall are heat sealed together by the second heat sealing seams, i.e. the side sealing seams 37A, so as to form the containing cavity 15A. The packaged items are adapted to be placed to the containing cavity 15A. The surrounding fluid filling walls provide fluid cushioning effect for the packaged items.

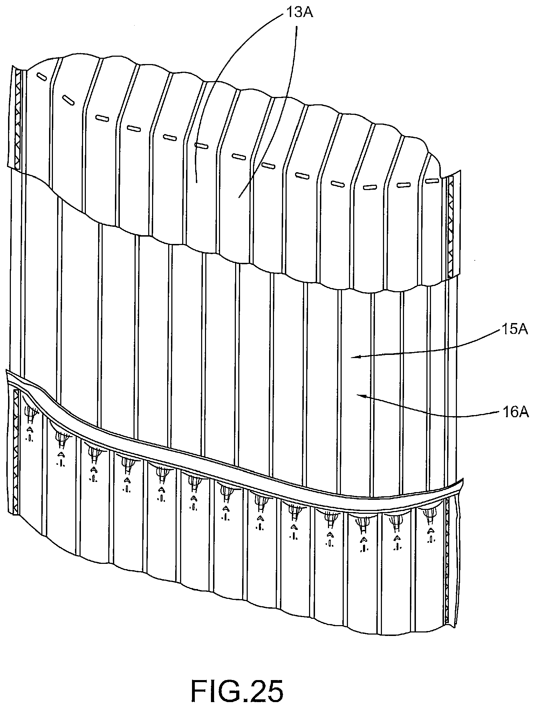

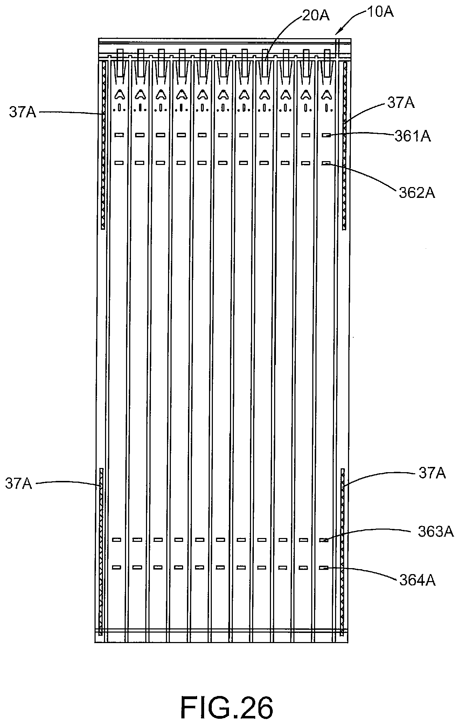

As shown in Fig. 25 and Fig. 26, according to another alternative mode, the fluid packaging arrangement comprises at least four lines of the bending seams 36A, i.e. a first line of bending seams 361A, a second line of bending seams 362 A, a third line of bending seams 363A and a fourth line of bending seams 364 A. Between the first and second lines of bending seams 361A and 362A and between the third line of and the fourth line of bending seams 363A and 364A respectively form a side wall. A bottom side wall is formed between the second line of and the third line of bending seams 362A and 363A. A top side wall is formed between the first line of and the opening 16A of the containing cavity 15A and between the fourth line of bending seams and the opening 16A of the containing cavity 15A. Thus, the whole fluid packaging arrangement has a substantially C shape, wherein the opening 16A is not on one end of the containing cavity 15A, but a substantially central area of the top side walls.

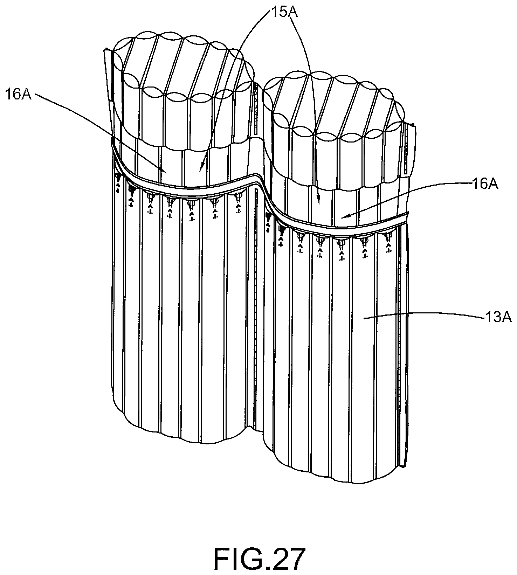

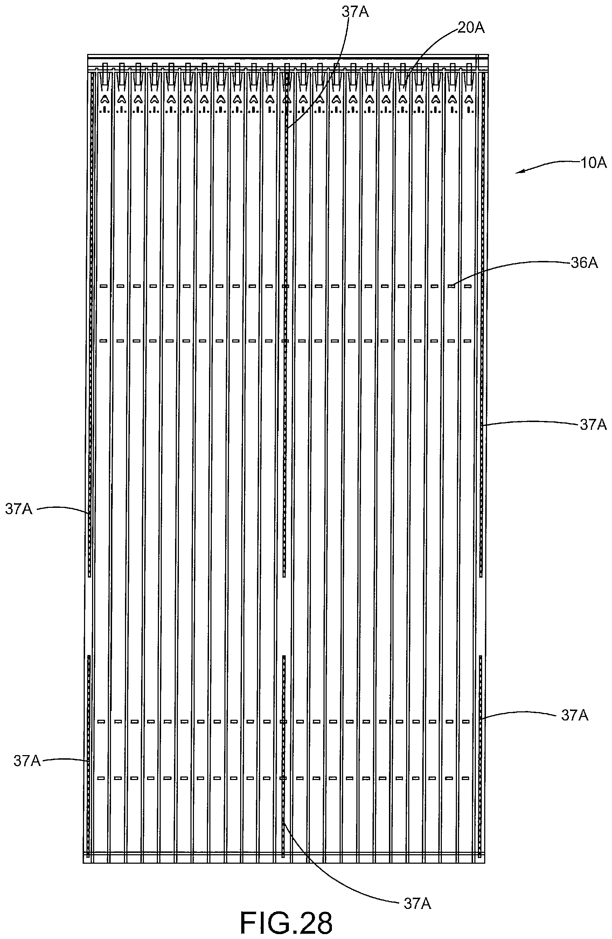

As shown in Fig. 27 and Fig. 28, according to another alternative mode, the fluid packaging arrangement can have a substantially O shape, and the opening 16A is formed to the side of the fluid packaging arrangement but near to one end of the fluid packaging arrangement. According to this embodiment, the containing cavities 15A can be formed, so that the fluid packaging arrangement is suited for containing a plurality of packaged items.

The fluid packaging arrangement can be used independently to provide fluid cushioning effect for packaged items. The fluid packaging arrangement can be used together with other packaging devices. In other word, packaged items can be put into the containing cavity 15A of the fluid packaging arrangement, then the fluid packaging arrangement carrying the packaged items is put into another packaging box, so as to provide protection effects for the packaged items, so as to provide convenience to the storing and transporting of the packaged items.

Correspondingly, the present invention provide a manufacturing method of a fluid packaging arrangement, wherein the manufacturing method comprises the following steps:
(a) overlapping the inner extending portions 212A and 222A of at least two valve films 21A and 22A and arranging the inner extending portions 212A and 222A of the valve films 21A and 22A between at least two fluid storing films 11A and 12A, and overlapping the outer extending portions 211A and 221A of two valve films 21A and 22A and arranging the outer extending portions 211A and 221A of the two valve films 21A and 22A outside the two fluid storing films 11A and 12A; and
(b) forming a fluid storing main body 10A having one or more inflatable cells 13 via a series of heat sealing seams 30A, wherein a main channel 24A is formed between the outer extending portions 211A and 221A of the two valve films 21A and 22A, wherein one or more fluid filling channel 23A corresponding with each fluid storing cell 13A are formed between the inner extending portions 212A and 222A, wherein while filing fluid, fluid enters into each fluid filling channel 23A from the main channel 24A, wherein when the pressure in the fluid storing chamber 14A of each fluid storing cell 13A reach to a predetermined value, inner extending portions 212A and 222A of the two valve films 21A and 22A attach to one of the fluid storing films 11A or 12A, wherein the fluid filling channel 23A is closed to prevent leaking fluid.

The step (b) of the above manufacturing method further comprises the following steps: connecting two valve films 21A and 22A respectively with two fluid storing films 11A and 12A in a heat sealing manner via a continuous main channel heat sealing seam 32A formed via a heat sealing process at the position of the entrance of the fluid filling channel, wherein a heat-resisting layer 26A can be provided between the two valve films 21A and 22A so as to ensure the forming of the fluid filling channel 23A ; forming continuous valve film end sealing seam 33A via connecting the outer extending portions 211A and 221A of two valve films 21A and 22A in a heat sealing manner; forming more than one line of dividing seams 31A via a heat sealing process, so that the fluid packaging arrangement forms a plurality of fluid storing cells 13A ; forming one or more lines of bending seams 36A by connecting two fluid storing films 11A and 12A via a heat sealing process, wherein the fluid packaging arrangement is suitable to be bended along the bending seams 36A to form a plurality of fluid filling wall ; and make the fluid packaging arrangement to form a fluid packaging bag having a spatial configuration via the heat sealing of twice heat sealing seams 37A.

In addition, in the step (a), the two valve films 21A and 22A and the two fluid storing films 11A and 12A can be independent films or a whole film which is folded.

According to another aspect of the present invention, the present invention provides a filling method of a fluid packaging arrangement, wherein the filling method comprises the following steps:
(A) Filling fluid into the main channel 24A formed between outer extending portions 211A and 221A of two valve films 21A and 22A ;
(B) Guiding the fluid in the main channel 24A into the fluid filling channel 23A formed between inner extending portions 212A and 222A of two valve films 21A and 22A and into the fluid storing chamber 14A of one or more fluid storing cells 13A through the fluid filling channel 23A.
(C) While the pressure in the fluid storing chamber 14A reach to a predetermined value, inner extending portions 212A and 222A of two valve films 21A and 22A attach to one of the fluid storing films 11A or 12A to close the fluid filling channel 23A.

In this filling method according to the present invention, fluid enters into the main channel 24A formed by the check valve 20A and then enters into the fluid filling channel 23A formed by the check valve 20A and then enters into each fluid storing chamber 14A, so that the filling is more smooth.

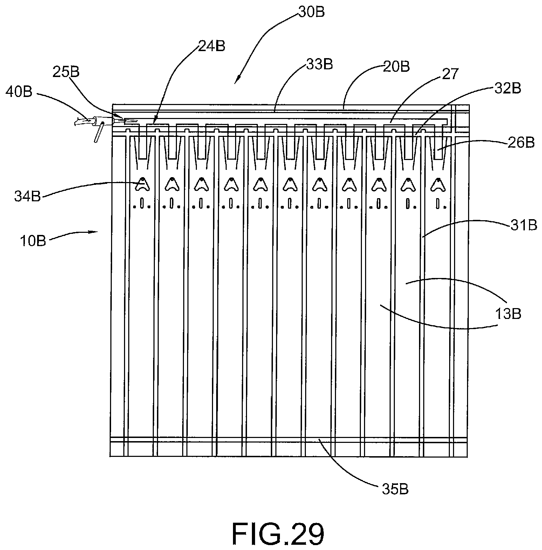

Fig. 29 illustrates a fluid container according to a third preferred embodiment of the present invention, wherein the fluid can be gas or liquid. In other words, according to this preferred embodiment of the present invention, the fluid is not limited to gas as recited in the above third preferred embodiment. More specifically, the fluid is embodied as gas, wherein the gas is selected from air, oxygen, carbon dioxide, nitrogen, hydrogen, rare gas and mixture gas. The fluid container storing gas is used to provide cushioning effect, or just is used to store gas, for example to store oxygen to be used to where needs oxygen. If the fluid is embodied as liquid, such as water, the fluid container can store water and the fluid container can be used to provide cushioning effect to keep warm. One skilled in the art will understand that the above species of gas and liquid are only example to the present invention but not a limitation.

Specifically, the fluid container comprises at least one fluid storing main body 10B, wherein the fluid storing main body 10B comprises two fluid storing films, i.e. a first fluid storing film 11B and a second fluid storing film 12B, so as to form at least one fluid storing cell 13B. The fluid container further comprises at least one check valve 20B, so as to fill fluid to the fluid storing cell 13B.

The fluid storing cell 13B is mainly formed by the two fluid storing films, i.e. the first fluid storing film 11B and the second fluid storing film 12B, wherein the first fluid storing film 11B and the second fluid storing film 12B can be two flexible films, which can be made of various proper materials, such as polyethylene film, polypropylene film, polyvinyl chloride film, polyester film, polystyrene film, and composite film. There is no limitation in this respect according to the present invention. All proper flexible films are able to be used to make the fluid storing films. The first fluid storing film 11B and the second fluid storing film 12B overlap with each other and are heat-sealed together to form a fluid storing chamber 14B of the fluid storing cell 13B, wherein the fluid storing chamber 14B is used to store fluid.

The check valve 20B is used to fill fluid to the fluid storing cell 13B. In other words, while filing fluid, fluid enters into the fluid storing chamber 14B of each fluid storing cell 13B through the check valve 20B. After the pressure in the fluid storing chamber 14B meets requirement, the filling process is stopped.

It is worth mentioning that, according to the preferred embodiment of the present invention, the check valve 20B is a one-way valve. In other words, during filling fluid, after the pressure in the fluid storing chamber 14B reaches to a predetermined value, the pressure in the fluid storing chamber 14B will close the check valve 20B, so the filling will stop and the fluid in the fluid storing chamber 14B will not easily leak through the check valve 20B.

More specifically, the check valve 20B comprises two valve films, i.e. a first valve film 21B and a second valve film 22B. In similar, the first valve film 21B and the second valve film 22B can be two flexible films, which are able to be made of various proper materials, such as polyethylene film, polypropylene film, polyvinyl chloride film, polyester film, polystyrene film, and composite film. There is no limitation in this respect according to the present invention. All proper flexible films are able to be used to make the valve films.

According to this preferred embodiment of the present invention, the first valve film 21B and the second valve film 22B overlap with each other. After the first valve film 21B, the second valve film 22B, the first fluid storing film 11B and the second fluid storing film 12B being arranged, the two valve films 21B, 22B and the two fluid storing films 11B, 12B are heat sealed by a series of proper heat sealing seams 30B to form structure which can be filled with fluid. The heat sealing seams 30B are formed via proper heat-sealing process, so that two or more films are heat sealed at required positions.

More specifically, the first valve film 21B and the second valve film 22B overlap with each other and are heat sealed to form at least one fluid filling channel 23B and a main channel 24B and to form a fluid filling opening 25B which is used to fill fluid, wherein the fluid filling channel 23B and the main channel 24B communicate with each other. During inflation, users can use a fluid filling device 40B, such as a fluid filling pump to fill fluid to the fluid container through the fluid filling opening 25B. The fluid enters into the main channel 24B through the fluid filling opening 25B, and enters into each fluid filling channel 23B through the main channel 24B, so as to fill fluid to the fluid storing chamber 14B.

It is worth mentioning that the plurality of heat sealing seams 30B comprise a plurality of dividing seams 31B separated with each other, so that two or more fluid storing cells 13B are connected with each other in a side by side manner to form the fluid storing main body 10B, wherein the check valve 20B is provided to each fluid storing cell 13B correspondingly. In other words, each fluid storing cell 13B is able to be filled independently. An extending dividing seam 31B is formed between two of the fluid storing cells 13B, wherein the dividing seam 31B can be a heat-sealing line between two of the fluid storing cells 13B adjacent to each other, so as to form a plurality of independent fluid storing chambers 14B via these dividing seams 31B. Hence, if one of the fluid storing cells 13B is damaged to leak, other fluid storing cells 13B will not be affected. Of course, it is worth mentioning that the fluid storing cells 13B can also communicate with each other, so that only one check valve 20B is enough to fill fluid to all of the fluid storing cells 13B. In other words, the fluid container according to the present invention can form a plurality of the fluid storing cells 13B via heat-sealing the first fluid storing film 11B and the second fluid storing film 12B.

Corresponding with every fluid storing cell 13B, the check valve 20B forms one fluid filling channel 23B. That is to say, when the dividing seams 31B heat-seal the two fluid storing films 11B and 12B, the dividing seams 31B heat-seal the two valve films 21B and 22B at the same time, so that the four films are heat-sealed together to form the fluid filling channels 23B and the fluid storing chambers 14, wherein through each fluid filling channel 23B, fluid is suitable to be filled to the corresponding fluid storing chamber 14B.

It is worth mentioning that the dividing seams 31B, which are dividedly arranged with each other, can be arranged with equal distances to form the fluid storing cells 13B with the same size. Of course, the dividing seams 31B can also be arranged with unequal distance to form the fluid storing cells 13B with different sizes. The dividing seams 31B can be parallel with each other. According to the present invention, there is no limitation in this aspect. It is possible that a predetermined number of dividing seams 31B are arranged aslant or to form a turning in partial. Each fluid storing cell 13B can form one fluid filling channel 23B. Two or more fluid filling channels 23B can be formed in a relative big fluid storing cell 13B by heat-sealing technology, so as to improve filling efficiency.

In addition, the shape of each fluid storing cell 13B is able to change after being filled with fluid, so the fluid storing main body 10B can be made to form various shapes and sizes. The fluid storing cell 13B can be strip shaped, such as crosswise strip shaped, and lengthways strip shaped, or bulk block shaped. It is worth mentioning that the shape is not limitation. In the preferred embodiment, the fluid storing cell 13B can be formed to have a strip structure.

According to this preferred embodiment of the present invention, the main channel 24B is formed by the check valve 20B, which equal to a fluid distributing channel. While filling, fluid enters into the main channel 24B through the fluid filling opening 25B, and then enters into each fluid filling channel 23B through the main channel 24B, so that the fluid is filled to the corresponding fluid storing chamber 14B through each fluid filling channel 23B. When the fluid pressure in the fluid storing chamber 14B reach to a predetermined value, the pressure in the fluid storing chamber 14B acts on the two valve films 21B and 22B to close the fluid filling channel 23B, so as to avoid the fluid from running out of the fluid filling channel 23B to enter into the main channel 24B, i.e.to prevent the fluid in the fluid storing chamber 14B from leaking.

Thus, according to the preferred embodiment of the present invention, while filing fluid to each fluid storing chamber 14B, fluid is only distributed between the two valve films 21B and 22B. It is different from the prior art as illustrated in Fig. 1 and Fig. 2 of the drawings, according to which, fluid will enter into the main channel 1D between two outer films 1B and 1B and then enter into the filling channel 2C. According to the prior art, it may be occur that fluid enters between an outer film and an inner film adjacent with each other, such as between the outer film 1B and the inner film 2B from the space between two heat-sealing points 1E adjacent with each other, so that the filling effect is affected. According to the present invention, fluid only enters between two valve films 21B and 22B, and will not enters between one valve film and one fluid storing film as effected by the two fluid storing films 11B and 12B, so as to ensure the smoothness of the filling.

More specifically, according to the preferred embodiment of the present invention, it is different from the prior art as illustrated in Fig. 1 and Fig. 2 of the drawings, according to which, two inner films 2B and 2B are completely provided between the two outer films 1B and 1B. According to the present invention, two valve films 21B and 22B of the check valve 20B are only partially overlap with two fluid storing films 11B and 12B. As illustrated in Fig. 4 of the drawings, the first valve film 21 B and the first fluid storing film 11 B overlap with each other partially, wherein the second valve film 22B and the second fluid storing film 12B overlap with each other partially. Compare with the prior art illustrated in Fig. 1 and Fig. 2, the fluid packaging arrangement according to the present invention decrease the size of the fluid storing films 11B and 12B, so as to save more materials.

Correspondingly, two valve films 21B and 22B of the check valve 20B respectively comprise two outer extending portions 211B and 221B and two inner extending portions 212B and 222B. That is to say, the first valve film 21B comprises a first outer extending portion 211B and a first inner extending portion 212B, wherein the second valve film 22B comprises a second outer extending portion 221B and a second inner extending portion 222B. The first outer extending portion 211B and the first inner extending portion 212B are formed integrally by extending in the length direction, wherein the second outer extending portion 221B and the second inner extending portion 222B are also formed integrally by extending in the length direction.

According to the preferred embodiment of the present invention, the outer extending portions 211B and 221B of two valve films 21B and 22B overlap with each other to form the main channel 24B having the fluid filling opening 25B. The inner extending portions 212B and 222B of two valve films 21B and 22B overlap with each other and overlap with two fluid storing films 11B and 12B, so as to form each fluid filling channel 23B between the inner extending portions 212B and 222B after a heat sealing process is applied.

In other words, according to the present invention, the fluid storing films 11B and 12B have not extended to the position of the main channel 24B. Instead, the fluid storing films 11B and 12B are overlapped at a partial position of the check valve 20B and are heat sealed together. Thus, it is not necessary to connect an outer film and an inner film adjacent with each other in the heat sealing manner as the prior art illustrated in Fig. 1 and Fig. 2, so the making process is much simpler. Because there is only one outer extending portion 211B or 221B on both sides of the main channel 24B, while filing fluid, after fluid enters into the main channel 24B, the outer extending portions 211B and 221B of two valve films 21B and 22B can be swelled easily, so as to open the fluid filling channel 23B entering into each fluid storing cell 13B.

It is understandable that the inner extending portions 212B and 222B of two valve films 21B and 22B are provided between two fluid storing films 11B and 12B, and make the inner extending portions 212B and 222B adjacent to each other to connect with the fluid storing films 11B and 12B respectively via the main channel heat sealing seam 32, but prevent two inner extending portions 212B and 222B from being heat sealed together by the main channel heat sealing seam 32, so as to form each fluid filling channel 23B which can be filled with fluid between the inner extending portions 212B and 222B. Corresponding to the dividing seams 31B, each fluid filling channel 23B forms two side walls. Such obstructing manner can be realized by provide obstructing device, such as obstructing plate between two inner extending portions 212B and 222B in the heat sealing step, so as to heat seal two inner extending portions 212B and 222B together when forming the main channel heat sealing seam 32B. Preferably, the inner surface of at least one of two inner extending portions 212B and 222B is attached with one heat-resisting layer 26B, such as silicone oil, PVB, high temperature durable and adhering resisting ink, so that while forming the main channel heat sealing seam 32B, the inner extending portions 212B and 222B adjacent to each other respectively connect with the fluid storing films 11B and 12B in a heat seal manner, but two inner extending portions 212B and 222B are not heat sealed together by the main channel heat sealing seam 32B, so as to form the fluid filling channel 23B.

It is worth mentioning that the inner surface of at least one of two outer extending portions 211B and 221B is attached with a release layer 27. Since when the fluid container is not inflated with fluid, the two outer extending portions 211B and 221B are attached with each other, so that the main channel 24B is not easy to be opened, so that it is not convenient for inflating the fluid storing cells 13B via the main channel 24B and the fluid filling channels 23B, such as when filling air, it is not convenient for the air filling process. The release layer 27 is provided between the two valve films 21B and 22B, so as prevent the two valve films 21B and 22B from adhering with each other, so that when filling fluid such as air, the main channel 24B is easy to be opened, so as to facilitate the inflation of the fluid storing cells 13B via the main channel 24B and the fluid filling channels 23B. In other words, when inflating the fluid container with fluid, the existence of the release layer 27 between the two valve films 21B and 22B prevents the two valve films 21B and 22B from adhering to each other, so that the process of the fluid filling of the fluid storing cell 13B through the main channel 24B and the fluid filling channel 23B become more smoothly..

It is worth mentioning that the material used for forming the heat-resisting layer 26B, such as silicone oil, PVB and high temperature durable and adhering resisting ink, also can be used for forming the release layer 27, so as to prevent the two valve films form adhering to each other. In other words, the release layer 27 also can be made of material such as silicone oil, PVB and high temperature durable and adhering resisting ink. It is also can be seen that the release layer 27 and the heat resisting layer 26 can be formed using a same manner, such as forming by silicone oil, PVB or high temperature durable and adhering resisting ink, the prevent invention is not limited in this aspect. The release layer 27 and the heat resisting layer 26 can be made of same material, or different materials. The release layer 27 and the heat resisting layer 26 can be formed using a same forming manner, or different forming manners.

According to the third preferred embodiment, the release layer 27 and the heat resisting layer 26 is formed in a same manner, and is formed with a same material, so as to simplify the manufacturing process, and to reduce the manufacturing cost.

According to the third preferred embodiment of the present invention, the release layer 27 is integrally connected with the heat-resisting layer 26B, , so that the fluid fling process is relatively smooth and the manufacturing process is simplified. However, the present invention is not limited in this aspect, the person of ordinary skilled in the art will understand that the release film 27 also can be separated with the heat resisting layer 26B.

According to the third preferred embodiment of the present invention, all of the plurality of release layers 27 is integrally connected with the heat-resisting layers 26B of the check valves 20B. One skilled in the art will understand that this is only example of the present invention but is not a limitation. According to other embodiments of the present invention, the release layers 27 may not be connected with each other. Of course, it is possible that some release layers 27 are connected with each other integrally and other release layers 27 are not connected with each other.

It is worth mentioning that the step of the inner extending portions 212B and 222B respectively connecting with the fluid storing films 11B and 12B and forming the fluid filling channel 23B can also be realized by other manners other than the above embodiment in which a single heat sealing step is required, but instead be realized via several heat sealing steps. In other words, the first inner extending portion 212B of the first valve film 21B and the first fluid storing film 11B are connected by a main channel heat sealing seam 32B first in a heat sealing manner, then connect the second inner extending portion 222B of the second valve film 22B and the second fluid storing film 12 by another main channel heat sealing seam 32B in a heat sealing manner, and then heat seal the check valve 20B and two fluid storing films 11B and 12B together via other method, such as by the dividing seams 31B, so as to form one or more fluid filling channels 23B between two inner extending portions 212B and 222B.

In addition, it is worth mentioning that according to this preferred embodiment of the present invention, the outer ends of the outer extending portions 211B and 221B of two valve films 21B and 22B are heat sealed together via valve film end sealing seam 33B, so as to form the main channel 24B between the valve film end sealing seam 33B and the main channel heat sealing seam 32B. Thus, while filing fluid, fluid enters into each fluid filling channel 23B between the inner extending portions 212B and 222B of two valve films 21B and 22B through the main channel 24B between the outer extending portions 211B and 221B of two valve films 21B and 22B, so as to fill fluid to each fluid storing chamber 14B.

It can be seen that, according to this preferred embodiment of the present invention, the outermost dividing seams 31B of the fluid packaging arrangement form the edge heat sealing of the two sides of the fluid packaging arrangement. Two fluid storing films 11B and 12B are heat sealed together by fluid storing film end sealing seam 35B at the side far away from the check valve 20B, so the outermost dividing seams 31B, the valve film end sealing seam 33B and the fluid storing film end sealing seam 35B form the edge sealing of the four sides of the fluid packaging arrangement.

It is worth mentioning that, according to the preferred embodiment of the present invention, the check valve 20B forms the main channel 24B and the fluid filling channel 23B by overlapping and heat sealing the two valve films 21B and 22B. One skilled in the art will understand that the check valve 20B can be formed by folding only one film. In other words, the valve film end sealing seam 33B in the above embodiment is not requisite, and at the position corresponding to the valve film end sealing seam 33B, there can be a folding line of the film.

Similarly, according to the above embodiment, two fluid storing films 11B and 12B can be heat sealed together by the fluid storing film end sealing seam 35B on the side far away from the check valve 20B. As an alternative mode, two fluid storing films 11B and 12B can be formed by folding a whole film, so the above fluid storing film end sealing seam 35B is not necessary.

In addition, the inner extending portions 212B and 222B of two valve films 21B and 22B are respectively heat sealed together with two fluid storing films 11B and 12B near the entering opening of the fluid filling channel 23B. At the end far away from the entering opening of the fluid filling channel 23B, i.e. the end near to the exit of the fluid filling channel 23B, the inner extending portions 212B and 222B of two valve films 21B and 22B provide one or more blocking seams 34B, which heat seal the inner extending portions 212B and 222B of two valve films 21B and 22B together at the position corresponding with the blocking seams 34B. In other words, the heat-resisting layer 26B has not extended to the position of the blocking seams 34B, so the inner extending portions 212B and 222B of two valve films 21B and 22B can be heat sealed together at the position of the blocking seams 34B. As illustrated in Fig. 29 of the drawings, the blocking seams 34B can be provided at a position corresponding with the exit of fluid filling channel 23B and being separated by a predetermined interval. Thus, the fluid in the fluid storing chamber 14B will not be blocked by the blocking seams 34B, so as to prevent the fluid from running out directly through the fluid filling channel 23B. The shape, size and position of the blocking seams 34B can be designed as required. For example, according to some embodiments, a circuitous space can be formed to prevent fluid from leaking by entering the fluid filling channel 23B from the fluid storing chamber 14B.

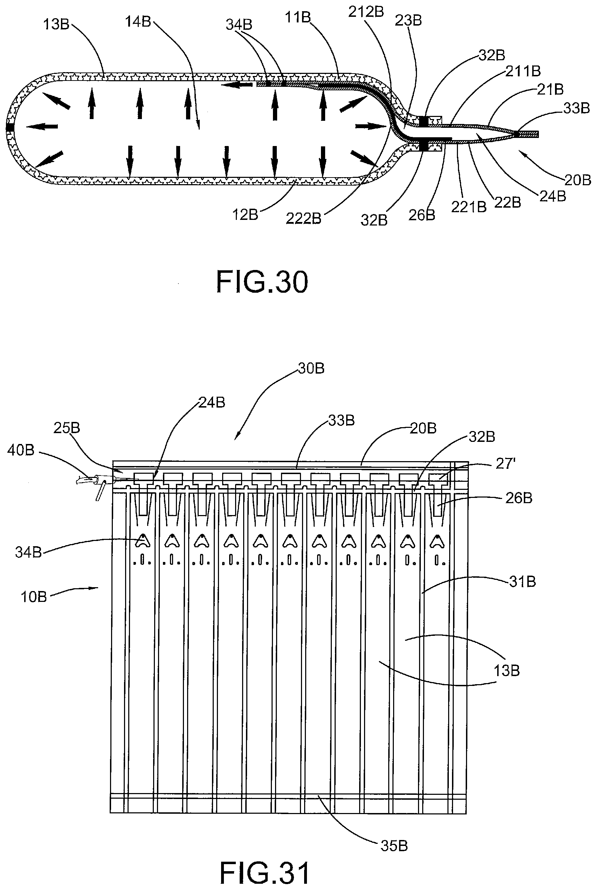

It is worth mentioning that the blocking seams 34B can further heat seal the inner extending portions 212B and 222B of two valve films 21B and 22B and one of the fluid storing films 11B and 12B, such as the fluid storing film 11B together. Thus, while filing fluid, fluid enters into the fluid storing chamber 14B from the fluid filling channel 23B, wherein the pressure of the fluid in the fluid storing chamber 14B acts on the inner extending portions 212B and 222B of two valve films 21B and 22B, wherein the heat sealing connecting formed by the blocking seams 34B makes the inner extending portions 212B and 222B of two valve films 21B and 22B and the fluid storing film 11B moving synchronously due to the swelling of the fluid storing cell 13B, so that the inner extending portions 212B and 222B of two valve films 21B and 22B both attach to the fluid storing films 11, as shown in Fig. 30 of the drawings. Thus, when the pressure in the fluid storing chamber 14B reach to a predetermined value, the pressure in the fluid storing chamber 14B will press the inner extending portions 212B and 222B of two valve films 21B and 22B to the inner surface of the fluid storing film 11B, so as to close the fluid filling channel 23B, so as to prevent the fluid storing cell 13B from leaking.

In addition, two valve films 21B and 22B of the check valve 20B can be common films. Two valve films 21B and 22B of the check valve 20B can also be self-adhesive films with self-adhesion ability. Due to the self-adhesion ability of two valve films 21B and 22B, while filing fluid, the inner extending portions 212B and 222B of two valve films 21B and 22B will attach together, so as to further prevent the fluid filling channel 23B from opening. In one preferred embodiment, two valve films 21B and 22B can be self-adhesive polyethylene film, polypropylene film, polyvinyl chloride film, polyester film, polystyrene film and composite film. This kind of self-adhesive polyethylene film, polypropylene film, polyvinyl chloride film, polyester film, polystyrene film and composite film are treated by a chemical process to make the surface of the film easy to attach tightly.

It is worth mentioning that two valve films 21B and 22B of the check valve 20B can be self- adhesive films with self-adhesion ability. According to other embodiments, it is possible to keep the self-adhesive characteristic of the inner extending portions 212B and 222B of two valve films 21B and 22B and to roughen the surface of the outer extending portions 211B and 221B of two valve films 21B and 22B by adding some attachment thereon to decrease the self-adhesive ability thereof. Thus, while filing fluid through the fluid filling opening 25B via a fluid filling device 40B, the outer extending portions 211B and 221B of two valve films 21B and 22B can be opened easily, so that fluid can enter into the main channel 24B smoothly and open all of the fluid filling channels 23B.

Correspondingly, the present invention provide a manufacturing method of a fluid packaging arrangement, wherein the manufacturing method comprises the following steps:
(i)overlapping the inner extending portions 212B and 222B of at least two valve films 21B and 22B and arranging the inner extending portions 212B and 222B of the valve films 21B and 22B between at least two fluid storing films 11B and 12B, and overlapping the outer extending portions 211B and 221B of two valve films 21B and 22B and arranging the outer extending portions 211B and 221B of the two valve films 21B and 22B outside the two fluid storing films 11B and 12B; and
(ii)forming a fluid storing main body 10B having one or more inflatable cells 13 via a series of heat sealing seams 30B, wherein a main channel 24B is formed between the outer extending portions 211B and 221B of the two valve films 21B and 22B, wherein one or more fluid filling channel 23B corresponding with each fluid storing cell 13B are formed between the inner extending portions 212B and 222B, wherein while filing fluid, fluid enters into each fluid filling channel 23B from the main channel 24B, wherein when the pressure in the fluid storing chamber 14B of each fluid storing cell 13B reach to a predetermined value, inner extending portions 212B and 222B of the two valve films 21B and 22B attach to one of the fluid storing films 11B or 12B, wherein the fluid filling channel 23B is closed to prevent leaking fluid.

The step(ii) of the above manufacturing method further comprises the following steps: connecting two valve films 21B and 22B respectively with two fluid storing films 11B and 12B in a heat sealing manner via a continuous main channel heat sealing seam 32B formed via a heat sealing process at the position of the entrance of the fluid filling channel, wherein a heat-resisting layer 26B can be provided between the two valve films 21B and 22B so as to ensure the forming of the fluid filling channel 23B, wherein a release layer 27 can be provided between the two valve films 21B and 22B so as to make the fluid filling process more smoothly, wherein the release layer 27 and the heat-resisting layer 26B integrally connect with each other; forming continuous valve film end sealing seam 33B via connecting the outer extending portions 211B and 221B of two valve films 21B and 22B in a heat sealing manner; forming more than one line of dividing seams 31B via a heat sealing process, so that the fluid packaging arrangement forms a plurality of fluid storing cells 13B ; forming one or more lines of bending seams 36B by connecting two fluid storing films 11B and 12B via a heat sealing process, wherein the fluid packaging arrangement is suitable to be bent along the bending seams 36B to form a plurality of fluid filling walls; and make the fluid packaging arrangement to form a fluid packaging bag having a spatial configuration via the heat sealing of second heat sealing seams 37B.

In addition, in the step (i), the two valve films 21B and 22B and the two fluid storing films 11B and 12B can be independent films or a whole film which is folded.

According to another aspect of the present invention, the present invention provides a filling method of a fluid packaging arrangement, wherein the filling method comprises the following steps:
(I) Filling fluid into the main channel 24B formed between outer extending portions 211B and 221B of two valve films 21B and 22B ;
(II) Guiding the fluid in the main channel 24B into the fluid filling channel 23B formed between inner extending portions 212B and 222B of two valve films 21B and 22B and into the fluid storing chamber 14B of one or more fluid storing cells 13B through the fluid filling channel 23B.
(III) While the pressure in the fluid storing chamber 14B reach to a predetermined value, inner extending portions 212B and 222B of two valve films 21B and 22B attach to one of the fluid storing films 11B or 12B to close the fluid filling channel 23B.

In this filling method according to the present invention, fluid enters into the main channel 24B formed by the check valve 20B and then enters into the fluid filling channel 23B formed by the check valve 20B and then enters into each fluid storing chamber 14B, so that the filling process is more smoothly.

Fig. 31 of the drawings illustrates a fluid container according to an alternative mode of the above third preferred embodiment of the present invention. What is different from the above third preferred embodiment is that each release layer 27' is relatively integrally connected with a heat-resisting layer 26B. One skilled in the art will understand that according to other embodiments of the present invention, if one fluid storing cell 13B corresponds with more than one, for example two check valves 20B, each release layer 27' can be connected with two relative heat-resisting layers 26B of the check valves 20B to form a one-piece structure. One skilled in the art can understand that it is just an embodiment but is not a limitation. The connection type between the release layer 27' and the heat-resisting layers 26B can be designed as required. The amount of the heat-resisting layers 26B corresponding to one release layer 27' can be designed as required.

As can be seen in Fig. 31, according to the alternative mode of the third preferred embodiment of the present invention, each one heat-resisting layers 26B is connected with one relative release layer 27' to form an integral structure, wherein the shape of the integral structure is like a letter "T". One skilled in the art will understand that the shape "T" is just an example but not a limitation to the present invention. According to other embodiments of the present invention, each release layer 27' can be connected with one heat-resisting layer 26B to form other shapes, such as triangle, trapezoid. So long as the heat-resisting layers 26B and the release layer 27' can perform their respective functions respectively, there is no limitation in this aspect.

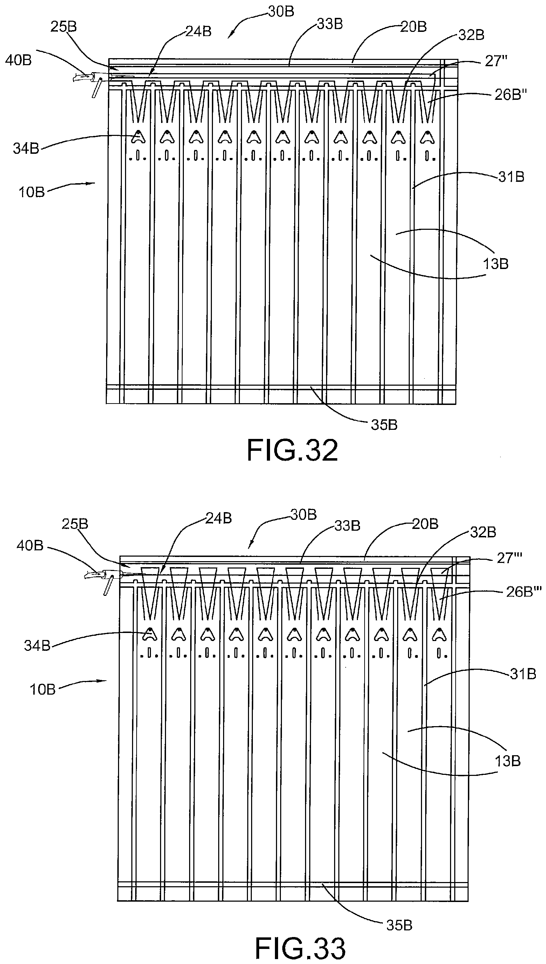

Fig. 32 is a schematic view of a fluid container according to another alternative mode of the above third preferred embodiment of the present invention. According to the alternative mode, each release layer 27" is connected with a heat-resisting layer 26B" to form a triangle integral body. Each check valve 20B is corresponding to one triangle integral body formed by one release layer 27" and one heat-resisting layer 26B". Multiple triangle integral bodies which are corresponding to the multiple check valves 20B are connected with each other to form a zigzag similar integral body.

Fig. 33 is a schematic view of a fluid container according to another alternative mode of the above third preferred embodiment of the present invention. According to the alternative mode, each release layer 27''' is connected with a heat-resisting layer 26B''' to form a triangle integral body. Each check valve 20B is correspondingly provided with one triangle integral body formed by one release layer 27''' and one heat-resisting layer 26B'''. The triangle integral bodies which are corresponding to the check valves 20B are not connected with each other.

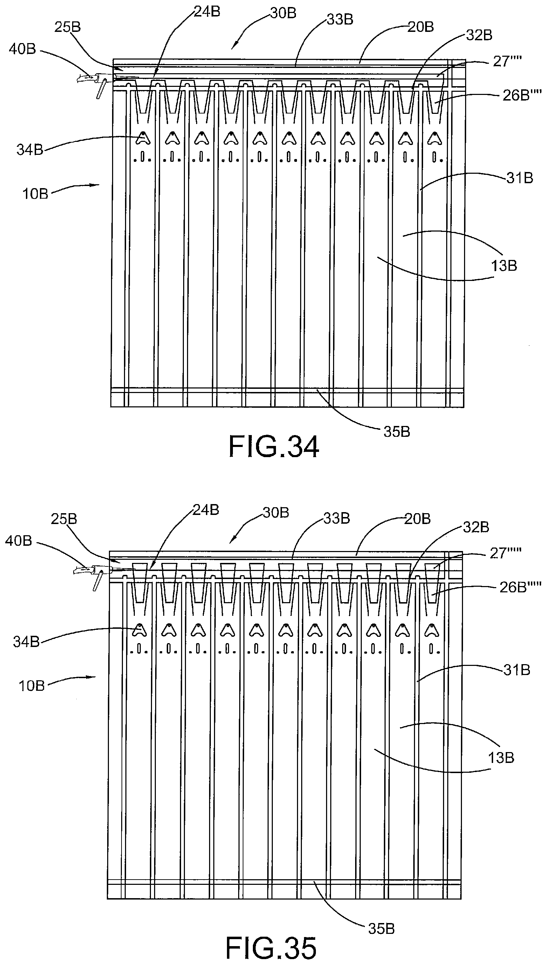

Fig. 34 is a schematic view of a fluid container according to another alternative mode of the above third preferred embodiment of the present invention. According to the alternative mode, each release layer 27'''' is connected with a heat-resisting layer 26B'''' to form a trapezoid integral body. Each check valve 20B is correspondingly provided with one trapezoid integral body formed by one release layer 27'''' and one heat-resisting layer 26B''''. Multiple trapezoid integral bodies which are corresponding to multiple check valves 20B are connected with each other to form a whole structure.

Fig. 35 is a schematic view of a fluid container according to another alternative mode of the above third preferred embodiment of the present invention. According to the alternative mode, each release layer 27''''' is connected with a heat-resisting layer 26B''''' to form a trapezoid integral body. Each check valve 20B is corresponding provided with one trapezoid integral body formed by one release layer 27''''' and one heat-resisting layer 26B'''''. The trapezoid integral bodies which are corresponding to the check valves 20B are not connected with each other.

One skilled in the art will understand that the embodiment of the present invention as shown in the drawings and described above is exemplary only and not intended to be limiting.

It will thus be seen that the objects of the present invention have been fully and effectively accomplished. The embodiments have been shown and described for the purposes of illustrating the functional and structural principles of the present invention and is subject to change without departure from such principles. Therefore, this invention includes all modifications encompassed within the spirit and scope of the following claims.

## Claims

1. A fluid container, comprising:
a fluid storing main body, wherein said fluid storing main body comprises two fluid storing films overlapping with each other, so as to form at least one fluid storing cell, wherein each fluid storing cell has a fluid storing chamber ; and
a check valve, wherein said check valve comprises two valve films overlapping with each other, wherein two said fluid storing films and two valve films overlap partially, wherein said check valve forms at least one fluid filling channel at a position where said four films overlap with each other, so as to fill fluid to said fluid storing chamber of each fluid storing cell via said fluid filling channel, and after the fluid is filled, the fluid in said fluid storing chamber press two said valve films to close said fluid filling channel, so as to avoid fluid leakage.

2. The fluid container, as recited in claim 1, wherein the overlapping parts of two said valve films and two said fluid storing films form said fluid filling channel, wherein other parts of two said valve films overlap with each other to form a main channel, wherein said main channel has a fluid filling opening communicating with said main channel, so that while filing fluid, fluid enters said main channel through said fluid filling opening, and then enters into said fluid storing chamber through said fluid filling channel.

3. The fluid container, as recited in claim 2, wherein said inner surface of at least one of two said valve films is provided with a heat-resisting layer, so that said fluid filling channel is formed between two said valve films via the heat sealing process.

4. The fluid container, as recited in claim 3, wherein two said valve films and two said fluid storing films are heat sealed by a main channel sealing seam, so that the one of the valve films and the corresponding adjacent one of said fluid storing films are heat sealed together.

5. The fluid container, as recited in claim 4, wherein two said valve films are heat sealed together at the ends far from said fluid filling channel via a valve film end sealing seam, so that said main channel is formed between said main channel sealing seam and said valve film end sealing seam.

6. The fluid container, as recited in claim 3, further comprising one or more blocking seams heat sealing two said valve film together, wherein said blocking seams blocks the fluid in said fluid storing chamber from running out from said fluid filling channel.

7. The fluid container, as recited in claim 6, wherein said blocking seam further heat seals two said valve films and one of said fluid storing films, so that after the fluid is filled, part of said valve film overlapping with said fluid storing films is pressed to said fluid storing film.

8. The fluid container, as recited in claim 4, wherein two said valve films are two independent films or are formed by folding one film.

9. The fluid container, as recited in claim 7, wherein two said fluid storing film are two independent films or are formed by folding one film.

10. The fluid container, as recited in claim 7, wherein said air packaging arrangement further forms a plurality of said fluid storing cells via one or more dividing seams, wherein each fluid storing cell is formed with at least one said fluid filling channel.

11. The fluid container, as recited in claim 7, wherein said fluid storing films and said valve films are flexible film, wherein said fluid storing films and said valve films are selected from the group consisting of polyethylene film, polypropylene film, polyvinyl chloride film, polyester film, polystyrene film and composite film.

12. The fluid container, as recited in claim 7, wherein said valve films are self-adhered films which are chemically modified, so as to improve the sealing property of said valve films for said fluid filling channels.

13. The fluid container, as recited in claim 12, wherein part of said valve films, where forms said main channel are roughen, so that said main channel can be opened easily during filling fluid.

14. The fluid container, as recited in claim 7, wherein said fluid container forms a cushioning pad.

15. The fluid container, as recited in claim 7, wherein after being heat sealed and bent, said fluid container forms a packaging bag having a containing cavity.

16. The fluid container, as recited in claim 7, wherein each fluid storing cell of said air packaging arrangement provide one or more bending seams, so as to heat seal two said fluid storing films together, so that each fluid storing cell forms a plurality of sub-fluid storing cells connecting and communicating with each other, so that said fluid storing main body forms a plurality of fluid filing side walls by bending along said bending seams, wherein said fluid filling side wall defines said containing cavity.

17. The fluid container, as recited in claim 16, wherein said bending seams are respectively provided at middle positions of said fluid storing cells, so as to form a communicating channel at two sides of said fluid storing cells for communicating with two adjacent said sub-fluid storing cells.

18. The fluid container, as recited in claim 16, wherein said bending seams are respectively provided at two sides of said fluid storing cell, so as to form a communicating channel at a middle of each of said fluid storing cells for communicating with two adjacent said sub-fluid storing cells.

19. The fluid container, as recited in claim 18, wherein a release layer is provided between said two valve films so as to make the fluid filling more smoothly, wherein said release layer and said heat-resisting layer are integrally connected with each other.

20. A check valve, wherein said check valve is suitable for filling fluid to a fluid container, wherein said fluid container comprises two fluid storing films overlapping with each other, so as to form at least one fluid storing cell, wherein each fluid storing cell has a fluid storing chamber, wherein said check valve comprises two valve films overlapping with each other, wherein each valve film comprises an outer extending portion and an inner extending portion, wherein said outer extending portion and said inner extending portion of each valve film are integrated, wherein two said inner extending portions and said fluid storing films of two said valve films are overlapped and connected with each other to form a fluid filling channel between two said inner extending portions, so as to fill fluid into said fluid storing chamber of each fluid storing cell via said fluid filling channel, and after the fluid filling process is finished, a pressure of said fluid storing chamber acts on two said valve films to close said fluid filling channel, so as to avoid fluid leakage.

21. The check valve, as recited in claim 20, wherein two said outer extending portions of two said valve films overlap with each other to form a main channel, wherein said main channel has a fluid filling opening communicating with said main channel, so that while filing fluid, fluid enters said main channel through said fluid filling opening, and then enters into said fluid storing chamber through said fluid filling channel.

22. The check valve, as recited in claim 21, wherein the inner surface of at least one of two said valve films is provided with a heat-resisting layer, so that said fluid filling channel is formed between two said inner extending portion of two said valve films via the heat sealing process.

23. The check valve, as recited in claim 22, wherein two said inner extending portions of two said valve films and two said fluid storing films are heat sealed together via a main channel sealing seam, so that the one said valve film and the corresponding adjacent one said fluid storing film are heat sealed together.

24. The check valve, as recited in claim 23, wherein two said outer extending portions of two said valve films are heat sealed via valve film end sealing seams at the side far away from said fluid filling channel, so that said main channel is formed between said main channel sealing seam and said valve film end sealing seam.

25. The check valve, as recited in claim 22, wherein said check valve further comprises one or more blocking seams connecting two said inner extending portions of two said valve films in a heat-sealing connecting manner, wherein said blocking seams blocks the fluid in said fluid storing chamber from running out from said fluid filling channel.

26. The check valve, as recited in claim 25, wherein said blocking seam further connects two said inner extending portions of two said valve films and one of said fluid storing films, so that after the fluid filling is finished, and parts of said valve films overlapping with said fluid storing film are pressed to said fluid storing film.

27. The check valve, as recited in claim 23, wherein two said valve films are two independent films or are formed by folding one film.

28. The check valve, as recited in claim 26, wherein said valve films are flexible films, which are selected from the group consisting of polyethylene films, polypropylene films, polyvinyl chloride films, polyester films, polystyrene films and composite films.

29. The check valve, as recited in claim 26, wherein said valve film are self-adhered films which are chemically modified, so as to improve the sealing property of said valve films for said fluid filling channels.

30. The check valve, as recited in claim 29, wherein part of said valve films, where forms said main channel are roughen, so that said main channel can be opened easily during filling fluid.

31. The check valve, as recited in claim 30, wherein a release layer is provided between said two valve films.

32. The check valve, as recited in claim 31, wherein said release layer and said heat-resisting layer are integrally connected with each other.

33. A manufacturing method of a fluid packaging arrangement, wherein said manufacturing method comprises the following steps:
(a) arranging inner extending portions of two valve films between at least two fluid storing films and overlapping outer extending portions of said two valve films outside said two fluid storing films; and
(b) forming a fluid storing main body having one or more inflatable cells via heat sealing connecting of a series of heat sealing seams, wherein a main channel is formed between the outer extending portions of said two valve films, wherein one or more fluid filling channel corresponding with each said fluid storing cell are formed between the inner extending portions, wherein while filing fluid, fluid enters into each said fluid filling channel through the main channel, wherein when the pressure in the fluid storing chamber of each said fluid storing cell reach to a predetermined value, inner extending portions of said two valve films attach to one of said fluid storing films, so that said fluid filling channel is closed to prevent leaking fluid.

34. The manufacturing method, as recited in claim 33, wherein said step (b) of the above method further comprises the following steps:
connecting two valve films with two fluid storing films correspondingly in a heat sealing manner via a continuous main channel heat sealing seam formed via a heat sealing process at position of the entrance of the fluid filling channel; and
forming continuous valve film end sealing seam via connecting the outer extending portions of said two valve films in a heat sealing manner, so as to form said main channel between said valve film end sealing seam and said continuous main channel heat sealing seam.

35. The manufacturing method, as recited in claim 33, further comprises a step of providing a heat-resisting layer between said two valve films, so as to ensure the forming of said fluid filling channel.

36. The manufacturing method, as recited in claim 33, wherein two said valve films are two independent films or are formed by folding one film, wherein two said fluid storing films are two independent films or are formed by folding one film.

37. The manufacturing method, as recited in claim 35, further comprises a step of providing a release layer between said two valve films, wherein said release layer and said heat-resisting layer are integrally connected with each other.

38. The manufacturing method, as recited in claim 36, further comprises a step of providing a release layer between said two valve films, wherein said release layer and said heat-resisting layer integrally connect with each other.

39. A filling method of a fluid packaging arrangement, wherein the filling method comprises the following steps:
(A) Filling fluid into a main channel formed between outer extending portions of two valve films;
(B) Guiding said fluid in said main channel into a fluid filling channel formed between inner extending portions of two valve films and into said fluid storing chamber of one or more fluid storing cells through said fluid filling channel; and
(C) while said pressure in said fluid storing chamber reach to a predetermined value, closing said fluid filling channel by attaching inner extending portions of two valve films to one of said fluid storing films.
